# EUROPÄISCHE PATENTSCHRIFT

(11) **EP 4 182 129 B1**
(45) Veröffentlichungstag und Bekanntmachung des Hinweises auf die Patenterteilung: **24.04.2024**
(21) Anmeldenummer: 21745957.7
(22) Anmeldetag: 15.07.2021
(51) Int. Cl.: B25J 19/06, B25J 21/00

(54) **KOMPAKTE ROBOTERZELLE**
COMPACT ROBOT CELL
CELLULE ROBOTISÉE COMPACTE

(30) Priorität: 16.07.2020 DE 102020208939
(43) Veröffentlichungstag der Anmeldung: 24.05.2023
(73) Patentinhaber: Demmeler Automatisierung und Roboter GmbH, 87751 Heimertingen (DE)
(72) Erfinder: DEMMELER, Johannes, 87751 Heimertingen (DE)
(74) Vertreter: MERH-IP Matias Erny Reichl Hoffmann Patentanwälte PartG mbB
(86) Internationale Anmeldenummer: PCT/EP2021/069702
(87) Internationale Veröffentlichungsnummer: WO 2022/013337

(56) Entgegenhaltungen:
- WO-A1-2019/138033
- DE-U1-202016 000 255
- US-A1- 2017 050 282

## Beschreibung

Die vorliegende Erfindung betrifft eine Kompaktzelle mit einer Schutzumhausung für Schweißvorgänge mittels Schweißroboter, bei der ein zu umschließender Arbeitsbereich mittels Verfahren einer Schutzhülle modular angepasst werden kann.

### Hintergrund der Erfindung

Gattungsgemäße aus dem Stand der Technik bekannte Roboterzellen für Schweißvorgänge umfassen zumeist ein oder mehrere Arbeitsräume, realisiert durch eine Arbeitsplatte oder sonstige, ein Werkstück fixierende Aufnahmen, einen bewegbaren Schweißroboter sowie eine den Schweißroboter und die Arbeitsfläche umschließende Außenhülle, die den Schweißer während den Schweißvorgängen des Schweißroboters schützt und den entstehenden Schweißrauch in eine vorgesehene Absaugvorrichtung lenkt. Die Schutzhülle ist dabei meist mit einer Tür, einem Fenster oder zumindest Vorhängen versehen, sodass der Schweißer im Falle eines Werkstückaustausches oder aufgrund manueller Einstellungen am Schweißroboter schnell an den jeweiligen Arbeitsbereich gelangt. Eine solche Vorrichtung ist in Dokument WO2019/138033A1 offenbart.

In der DE212012000203U1 ist eine Zellenumfassung für eine Schweißzelleneinheit mit erweiterbaren Wandstrukturelementen gezeigt, in welcher zur vorübergehenden Vergrößerung des Bewegungsbereiches des Schweißrobotersystems, einzelne Wandgeometrien verändert und den Bedürfnissen der Roboterbewegung angepasst werden können.

Es ist eine Aufgabe der vorliegenden Erfindung eine gattungsgemäße Schweißroboterzelle so auszubilden, dass diese eine möglichst kompakte Form mit einer möglichst optimalen Zugänglichkeit der jeweiligen Arbeitsbereiche aufweist. Zudem ist es eine Aufgabe die Struktur der Schweißroboterzelle so zu optimieren, dass die vorgelegten Arbeitsräume möglichst optimal genutzt werden können ohne den Schutz des Schweißers zu vernachlässigen.

### Detaillierte Beschreibung der Erfindung

Zur Lösung der vorstehend genannten Aufgabe werden die Merkmale der unabhängigen Ansprüche vorgeschlagen. Die abhängigen Ansprüche betreffen bevorzugte Ausführungsbeispiele der vorliegenden Erfindung.

Die Kompaktzelle mit einer Schutzumhausung für Schweißvorgänge und/oder Schneidvorgänge mittels Schweißroboter kann eine zumindest aus einem Zellendach und einer Zellenseitenwand bestehenden Schutzumhausung umfassen, welche durch eine Führungsvorrichtung mit einem Zellengrundrahmen verbunden sein kann und so zur Umschließung eines in der Kompaktzelle integrierten zumindest ersten oder zweiten Arbeitsbereichs bidirektional jeweils von einer ersten in eine zweite Position gefahren werden kann. Dabei kann die Führungsvorrichtung vorzugsweise pneumatisch, in weiteren bevorzugten Ausführungsformen jedoch auch motorisch, elektrisch und/oder auch pneumatisch unterstützt ansteuerbar sein. Darüber hinaus kann die Schutzumhausung zumindest an der Vorder- und Rückseite eine Rolltorvorrichtung aufweisen, welche Rolltore zur Umschließung des jeweiligen, in der Schutzumhausung liegenden Arbeitsbereiches modular auf- und abwärts bewegen kann und so einen bevorzugten Zugang zum jeweiligen Arbeitsbereich bietet. Das Verfahren der Schutzumhausung von einer Position in die nächste kann ferner zumindest jeweils einen Arbeitsbereich für einen Schweißer freigeben, wohingegen ein anderer Arbeitsbereich durch die Schutzumhausung komplett geschlossen und so als Arbeitsfläche des in der Kompaktzelle eingebauten Schweißroboters genutzt werden kann. Durch diese Ausgestaltung wird eine kostengünstige und zugleich flexible Ausgestaltung einer Roboterschweißzelle bereitgestellt. Insbesondere ermöglicht das Verfahren der Schutzumhausung und die so entstehenden, modular wechselbaren Arbeitsbereiche ein optimiertes, sicheres paralleles Arbeiten des Schweißers während der Schweißarbeiten des Roboters, wobei zugleich ein maximales Arbeitsflächenverhältnis zur Verfügung gestellt werden kann. Zudem bietet diese Anordnung durch ihre vorteilhafte Konstruktion eine hohe Kompaktheit und Transportierbarkeit, sodass sie sich problemlos in bereits bestehende Systeme integrieren und von mindestens 3 von 4 Seiten und oben beladen lässt.

In einer bevorzugten Weiterbildung umfasst die Schutzumhausung vier Seitenwände welche jeweils zumindest eine Rolltorvorrichtung aufweisen. Die o.g. Zellenseitenwand kann daher bei dieser Weiterbildung von einer Rolltorvorrichtung gebildet werden, sodass eine einfache Zugänglichkeit von allen Seiten möglich ist. Die Schutzumhausung ist bei dieser Weiterbildung als Portal auf (bevorzugt vier) Säulen ausgebildet wobei zwischen diesen Säulen jeweils eine Rolltorvorrichtung und/oder ein Schweißvorhang vorgesehen sein kann. Besonders bevorzugt kann zudem ein Schweißvorhang an zumindest einer und bevorzugt an allen Seiten der Schutzumhausung vorgesehen sein.

In einem bevorzugten Ausführungsbeispiel kann dabei der erste Arbeitsbereich bevorzugt ein zur Vorderseite der Schutzumhausung gerichteter, vorderer Arbeitsbereich sein und der zweite Arbeitsbereich ein, auf die Hinterseite der Schutzumhausung bezogener, hinterer Arbeitsbereich.

Ferner ist die Zellenseitenwand vorzugsweise in einem Stück gefertigt, besteht aus einer Eisen oder Aluminiumlegierung oder aus einem hitzebeständigen Polymer und kann bevorzugt Bereiche zur Anbringung von Schweißervorhängen umfassen. Darüber hinaus umfasst die Seitenwand vorzugsweise zumindest ein Sichtfenster, welches in einer besonders bevorzugten Weiterentwicklung ebenso aus hitzebeständigem und UV-filterndem Material bestehen kann und den Blick auf den umschlossenen Arbeitsbereich ermöglicht. Somit kann der arbeitende Schweißer effizient von eventuellen Schädigungen (Funkenflug, UV-Strahlung etc.) während des Roboterschweißbetriebes geschützt werden, während er gleichzeitig den Schweißvorgang und/oder Schneidvorgang leicht über das Fenster beobachten kann. In einer besonders bevorzugten Ausführungsform kann das Sichtfenster auch in einem bevorzugt an der Zellenseitenwand angebrachten Rolltor vorgesehen sein.

Bevorzugt kann die Seitenwand zudem fest mit dem Zellendach, vorzugsweise durch eine Schweißnaht oder Verschraubungen, verbunden werden und bildet so das verfahrbare Gerüst der Schutzumhausung aus. Die genannten Konstruktionsarten besitzen dabei den Vorteil eine kompakte, gewichtstechnisch leichte und stabile Form der Schutzumhausung zu gewährleisten. Folglich lässt sich ein robuster und zugleich kostengünstiger Körper zum Schutz des Schweißers bereitstellen. Das Zellendach kann ebenso bevorzugt aus hitzebeständigem Material, vorzugsweise Metall oder Kunststoff, gefertigt sein und kann vorzugsweise ein Gehäuse zur Integration von Zusatzelementen beinhalten.

Darüber hinaus kann bevorzugt zumindest eine Ansaugöffnung am Zellendach realisiert sein, sodass beim Verfahren der Schutzumhausung eine an der Ansaugöffnung vorgesehene, bevorzugt auf dem Dach integrierte Ansaugvorrichtung mitgeführt werden kann. Hierdurch kann das Absaugen des schädlichen Schweißrauches an verschiedenen Arbeitsbereichen durch eine einzelne Ansaugvorrichtung realisiert und somit effektiv umgesetzt werden.

In einer weiteren, bevorzugten Ausführungsform, kann die Absaugvorrichtung in anderen Positionen, wie zum Beispiel extern (in der Werkshalle) und mit einem bewegbaren Schlauch mit der Kompaktzelle (bzw. der Ansaugöffnung) verbunden werden. Gleichermaßen kann die Ansaugvorrichtung auch an der Unterseite der Zelle, etwa in einem als Arbeitsfläche genutzten Schweißtisch oder an der Zellenseitenwand, integriert sein. Zudem kann bevorzugt eine nach unten geführte Absaugung wie beispielsweise ein bewegbarer Schlauch oder ein verfahrbahres Röhrensystem, zum Absaugen des umschlossenen Arbeitsraums genutzt werden. Letztere Ausführungsform besitzt dabei den zusätzlichen Vorteil, dass durch ein bewegliches Führungssystem auch nur gewünschte Flächen abgesaugt werden was die notwendige Ansaugstärke und somit die entfallenden Energiekosten weiter minimieren kann.

Vorzugsweise lassen sich zudem zumindest eine vordere Rolltorvorrichtung an der Vorderseite und eine hintere Rolltorvorrichtung an der Rückseite der Schutzumhausung wiederfinden, welche zumindest ein vorzugsweise aus Metall bestehendes Rolltor an einer bevorzugt im Dachgehäuse integrierten Rolltoraufhängung bereitstellen und das Rolltor zum Schließen von der Dachfläche zur Arbeitsfläche und zum Öffnen von der Arbeitsfläche zur Dachfläche führen. Weiterhin können die Rolltore vorzugsweise auch ein integriertes Rollgitter und/oder Fenster oder Fensterbereiche (welche beispielsweise aus Schweißerschutzglas hergestellt sind) zur Beobachtungdes in der Schutzumhausung inneren Arbeitsbereiches umfassen. Beim Schlie-ßen bzw. Öffnen der Rolltore schließen diese bündig mit den vorgenannten Seitenwänden bzw. mit den Seiten der Schutzumhausung ab, sodass sich in einer geschlossenen Stellung beider Rolltorvorrichtungen ein zu allen Seiten umschlossener Raum für den unter der Schutzumhausung befindlichen Arbeitsbereich ergibt und die geöffnete Stellung zumindest einer Rolltorvorrichtung den Zugriff auf den von der Schutzumhausung umschlossenen Arbeitsbereich ermöglicht. Somit lässt sich mit diesem Aufbau nicht nur eine effiziente Umschließung des jeweiligen Arbeitsbereiches ermöglichen, sondern ebenso eine vereinfachte Zugänglichkeit letzteren durch eine teilweisen Öffnung und Schließen der Rolltore realisieren.

In einer besonders bevorzugten Ausführungsform kann an der oben genannten Schutzumhausung auch an drei Seiten (besonders bevorzugt an allen vier Seiten) zumindest eine der Rolltorvorrichtungen integriert sein, wobei vorzugsweise zumindest ein Rolltor an jeder der Rolltorvorrichtungen in der Lage sein kann die jeweilige Seite der Schutzumhausung komplett zu verschließen. Hierdurch wird die komplette Umschließung des jeweiligen, unter der Schutzumhausung liegenden Arbeitsbereiches ermöglicht, wobei die zusätzliche Rolltorvorrichtung eine verbesserte Modularität der Arbeitsbereiche sowie eine optimierte Zugänglichkeit realisiert.

Darüber hinaus können die einzelnen Rolltore der Rolltorvorrichtungen vorzugweise jeweils unabhängig durch ein Antriebsmodul geöffnet und geschlossen werden und umfassen bevorzugt eine Sicherungseinrichtung, um mögliches Einklemmen von Gegenständen oder Körperteilen zu vermeiden. In einer besonders bevorzugten Form können einzelne Rolltore zudem modular verbunden werden, um so, durch Öffnen und Schließen einzelner Rolltorkombinationen, einen Arbeitsbereich in verschiedene Teilarbeitsbereiche aufzuteilen. Durch diese Vorrichtung lässt sich ein jeweiliger Arbeitsbereich besonders effektiv und schnell vergrößern bzw. modulieren, wodurch der genutzte Arbeitsablauf noch effizienter gestaltet werden kann. Bevorzugt kann zudem zumindest ein Rolltor an der vorderen und der hinteren Rolltorvorrichtung bereitgestellt sein, das zur schnelleren Modulation dieser Teilarbeitsbereiche die jeweilige (Vorder- oder Rück-)Seite der Schutzumhausung komplett verschließen kann.

Bevorzugt umfassen die Rolltorvorrichtungen zudem zumindest einen Antrieb zum Öffnen und Schließen der Rolltorvorrichtung und bevorzugt zumindest eine Sicherungseinrichtung zur Vermeidung von Einklemmvorfällen. Durch diese Zusatzelemente lässt sich aufgrund der genauen, elektrischen Ansteuerung der Rolltore die Bewegung letzterer noch präziser definieren sowie deren Sicherheitsstandart für den Gebrauch in einem parallelen Schweißverfahren in allen Maßen optimieren.

Darüber hinaus können die Rolltorvorrichtungen unabhängig voneinander geöffnet und geschlossen werden, wodurch eine nochmals verbesserte Modularität des Aufbaus realisiert werden kann.

Zum Verfahren der Schutzumhausung von zumindest einer in eine andere Position und zurück, kann in einem bevorzugten Aufbau zumindest eine Führungsschiene an die untere Seite des Daches angebracht sein und diese auf einer festen, bewegungsfreien Führungsvorrichtung aufliegen. Dabei ist die Führungsvorrichtung vorzugsweise pneumatisch oder (nur) pneumatisch unterstützt ansteuerbar, sodass mögliche Abnutzungen durch das Verfahren der Schutzumhausung sowie das Verletzungsrisiko während des Verfahrens aufgrund von integrierter Sensorik minimiert wird. Alternativ kann die Steuerung der Führungsvorrichtung zudem elektrisch oder mechanisch vollzogen werden, was jeweils zu einem genaueren oder vereinfach zu realisierenden Verfahrmechanismus der Schutzumhausung führen kann.

In einer besonders bevorzugten Vorrichtungsdarstellung ist die Führungsvorrichtung zudem zumindest an einen statischen Grundrahmen befestigt, sodass die Schutzumhausung auf der Führungsvorrichtung entlang des Grundrahmens zumindest von einer ersten Position zur Umschließung des ersten Arbeitsbereiches in eine zweite zur Umschließung des zweiten Arbeitsbereiches und zurück verfahrbar ist. Eine solche Ausführung ermöglicht es die Form der Kompaktzelle möglichst optimal zu gestalten, da die Geometrie und Größe der zu schützenden Arbeitsbereiche somit lediglich von der Form des Grundrahmens abhängt. Darüber hinaus ist der Grundrahmen vorzugsweise während des Verfahrens der Schutzumhausung von einer Position in eine andere und zurück innerhalb der Seitenwand der Schutzumhausung befestigt, sodass die wichtigen Führungselemente einen besonders effizienten Schutz während des Verfahrens, jedoch auch beim Transport der gesamten Kompaktzelle erfahren.

Insbesondere ermöglicht ein solcher Grundrahmen auch bei mehr als zwei Arbeitsbereichen eine optimale Verfahrbarkeit der Schutzumhausung. So kann in einer bevorzugten Ausführungsform der Erfindung, die Kompaktzelle beispielsweise auch zumindest einen ersten, einen zweiten und einen dritten Arbeitsbereich aufeinanderfolgend entlang einer Längsachse umfassen, wobei die Schutzumhausung weiterhin durch lineares Verfahren entlang der durch den Grundrahmen definierten Längsachse die einzelnen Arbeitsbereiche jeweils umschließen und somit den Schweißer selbst in komplexeren Aufbauten weiterhin optimal schützen kann.

Die Führungsvorrichtung ist weiterhin bevorzugt so konfiguriert, dass ein wechselseitiger Schweißbetrieb ermöglicht wird, d.h. die Schutzumhausung in der zweiten Position den zweiten Arbeitsbereich vollkommen umschließen kann, wobei beispielsweise der erste Arbeitsbereich für den Schweißer frei zugänglich gemacht wird und beim Verfahren der Schutzumhausung in die erste Position der vordere Arbeitsbereich umschließbar wird, wohingegen der oder die hinteren Arbeitsbereiche freigegeben wird/werden. Somit kann eine permanente Parallelarbeit des Schweißers zur Vorbereitung des nächsten Arbeitsschrittes oder Schweißstücks ermöglicht werden, was gleichermaßen die Effektivität des Schweißvorgangs weiter erhöht. Zudem können in einem besonders bevorzugten Aufbau die Wände und Rolltore der Schutzumhausung in zumindest einer Position bündig mit Rahmen des Arbeitsbereiches abschließt, sodass eine vorteilhafte Transportierbarkeit und Kompaktheit der Kompaktzelle entsteht.

Somit kann die Führungsvorrichtung bevorzugt so konfiguriert sein, dass nach dem Bewegen der Schutzumhausung von zumindest einer Position in die andere Position, zumindest ein Arbeitsbereich nicht mehr von der Schutzumhausung von allen Seiten umschlossen wird.

Vorzugsweise ist der Grundrahmen ferner mit zumindest einem modularen Schweißtisch verbunden, bevorzugt an beiden Seiten des Tisches, wodurch der Grundrahmen nicht nur an weiterer Stabilität gewinnt, sondern die genutzten Arbeitsbereiche ebenso weiter optimiert werden können. Aus diesem Grund ist auch der Schweißtisch bevorzugt mit einem Lochrasterplatte versehen, sodass der Schweißtisch als Auflage für zumindest eine der Arbeitsbereiche zur genauen Justierung von Arbeitsmaterialien und anderen Elementen genutzt werden kann. In einer besonders bevorzugten Ausführungsform umfasst jeder Arbeitsbereich darüber hinaus zumindest einen modularen Schweißtisch oder eine Schweißplatte, wobei ein Schweißtisch weitere Elemente, wie etwa ein zusätzliches Schweißgerät für den Schweißer, Schubladen oder eine Verbindungsstelle zu einem anderen Arbeitsbereich umfassen kann, was den allgemeinen Schweißvorgang innerhalb der Kompaktzelle erheblich erleichtern und die Produktionsgeschwindigkeit beschleunigen kann.

Zudem kann der modulare Schweißtisch im Bezug zum Grundrahmen bevorzugt so konfiguriert sein, dass er in zumindest einer Position der Schutzumhausung von allen Seiten umschlossen ist, wodurch sich nicht nur eine optimale Kompaktheit bzw. Transportierbarkeit der Kompaktzelle realisieren lässt, sondern ebenso ein verbesserter Schutz des Schweißers erreicht wird.

Zusätzlich bietet ein modularer Schweißtisch auch die Möglichkeit die obengenannte, bevorzugte Einteilung der Arbeitsflächen weiter zu optimieren. So kann durch das Lochraster in einer besonders bevorzugten Darstellungsart zumindest eine weitere, modulare und längs der Schutzumhausungs-Verfahrensrichtung gerichtete Trennwand in eine der Arbeitsbereiche integriert und mit zumindest einem der modularen Rolltoren der hinteren oder vorderen Rolltorvorrichtungen kombiniert werden. Durch eine solche Vorrichtung lassen sich somit in der geschlossenen Stellung der jeweiligen Rolltorvorrichtungen Arbeitsbereiche in kleinere Teilarbeitsbereiche einteilen, welche ebenso zu allen Seiten umschlossen werden können. Bevorzugt kann die Trennwand dabei auch durch ein Rolltor realisiert werden, sodass sich die jeweiligen Arbeitsbereiche durch Öffnen und Schließen der jeweiligen Rolltore modular zusammensetzen lassen können.

Der zu nutzende Schweißroboter kann bevorzugt ebenso auf dem Schweißtisch, an den Seitenwänden der Schutzumhausung oder der Innenseite des Zellendaches auf einer Auflage oder einer mit den oben genannten Elementen verbundenen Schiene in zumindest eine der Arbeitsbereiche positioniert sein. Dabei kann in einer besonders bevorzugten Ausführungsform ein durch einen Manipulator an zumindest einer Station versehener, zumindest in einer Drehachse bewegbarer Schweißroboter gewählt werden, der bevorzugt auch ein Cobot sein kann. Durch einen solchen Roboter ist es folglich möglich selbst komplexe Schweißerarbeiten zu erfüllen, wobei die in dem Schweißtisch eingearbeiteten Lochraster die Positionierung bzw. Fixierung letzteren noch flexibler gestalten können und somit dem Schweißsystem weitere Freiheitsgrade ermöglichen.

Der Cobot wiegt bevorzugt weniger als 40 Kilogramm, wodurch er im Gegensatz zu einer klassischen Industrieroboteranlage flexibel dort eingesetzt werden kann, wo er gerade benötigt wird. Während der Roboter schweißt, kann sich der Mitarbeiter zurückziehen und muss so den Schweißrauch nicht einatmen. Der Cobot ist zudem sehr leicht zu programmieren. Mit Handführung und einer Bedienung per Touch-Panel ist das Teachen neuer Aufgaben schon nach kurzer Einarbeitung möglich. Mit einer Free-Drive-Funktion kann der Cobot bzw. der Brenner ganz simpel per Hand an die Stelle bewegt werden, an der er starten und enden soll. Auch Zwischenwegepunkte und Abschnitte werden so programmiert. Der Cobot (oder kollaborative Roboter) liefert eine gleichbleibend hohe Qualität der Schweißnähte, die wenig bis gar keine Nacharbeit erfordert.

Zudem sind Cobots technisch so ausgelegt, dass sie ohne Schutzzaun in direkter Nachbarschaft zu Menschen sicher arbeiten können. Die geforderte Sicherheit im direkten Kontakt mit dem Bediener gewährleistet der Cobot durch eine einzigartige 6-fache Kraft- und Momentenüberwachung, die eine flexible Interaktion zwischen dem Roboter und seiner Umgebung ermöglicht. Ein vorteilhafter Cobot erfüllt bevorzugt die Kollaborationsart gemäß der technischen Spezifikation ISO TS15066.

Wird die Kompaktzelle oder Cobot-Schweißzelle mit Zusatzachsen (Positioniervorrichtung) ausgestattet, kann dem Cobot ohne Programmierkenntnisse mittels verschieben von Hand sehr schnell die Positionspunkte gelernt werden und gleichzeitig Werkstücke mittels den Zusatzachsen in optimale Schweißlage positioniert werden und somit produktiv auch mehrseitig bearbeitet werden. Der Cobot führt eine präzise Bewegung des Brenners aus, das Schweißsystem liefert die perfekte Naht. Bevorzugt weist der kollaborative Roboter einen Lernmodus auf um eine Arbeitsbewegung des Schweißbrenners zum Bearbeiten des Werkstücks zu erlernen und einen Arbeitsmodus um die im Lernmodus erlernte Arbeitsbewegung durchzuführen, wobei der Arbeitsmodus sowohl Schweißen als auch Schneiden des Werkstücks ermöglicht.

Ferner ermöglicht die Positionierung des Schweißroboters an den Seitenwänden der Schutzumhausung oder dem Zellendach, dass der Schweißroboter durch Verfahren der Schutzumhausung zur Umschließung eines jeweiligen Arbeitsbereiches ebenso mitverfahren und zur Bearbeitung des in dem Arbeitsbereich liegenden Werkstücks genutzt werden kann. Eine solche Ausführungsform bietet somit nicht nur eine optimale Kompaktheit bzw. Raumnutzung der Kompaktzelle, da durch eine solche Befestigung mehr Arbeitsfläche am zugehörigen Schweißtisch realisiert werden kann, sondern verhindert ebenso etwaige Restriktionen die sich beim Verfahren der Schutzumhausung um oder durch eine festgelegte Schweißroboterposition ergeben würden.

Bevorzugt ist die Führungsvorrichtung der Schutzumhausung jedoch zumindest so gegenüber der Position des Schweißroboters konfiguriert, dass der Schweißroboter durch die Schutzumhausung in der ersten Position und bevorzugt auch durch die Schutzumhausung in den anderen Positionen von jeder Seite umschließbar ist und vor jedem Schweißvorgang automatisch alle Seiten schließt. Durch solch eine Konstruktion ist es möglich eine optimale Sicherheit für den Schweißer zu gewährleisten ohne die Bewegung der Schutzumhausung zu beeinträchtigen.

Neben einer festen Aufnahme des Schweißroboters, durch z.B. Schraubenfixierungen, kann der Schweißroboter bevorzugt auch auf einem Roboterführungssystem, d.h. einer Schiene oder einer exzentrischen Schwenk- bzw. konzentrischen Rundachse auf dem Schweißtisch oder erneut jeweils an der Seitenwand der Schutzumhausung oder am Zellendach positioniert werden. In einer äußerst bevorzugten Ausführungsform kann der Schweißroboter so über ein externes Kontrollsystem selbstständig auch zwischen den oben genannten, modular definierten Teilarbeitsbereichen verfahren oder zwischen den jeweiligen Arbeitsbereichen wechseln, und so selbst komplexe, räumlich verteile Arbeitsschritte bewältigen. Somit können durch die Wahl des Roboterführungssystems die Verfahrensschritte noch weiter optimiert werden und durch die minimale Flächenanforderung (z.B. der Rundachse) zusätzlicher Arbeitsbereich geschaffen werden.

Zusammenfassend lässt sich aufgrund der oben genannten Merkmale somit eine kompakte Schweißzelle realisieren, die insbesondere durch die verfahrbare Schutzumhausung und den dadurch entstehenden wechselseitigen Schweißbetrieb nicht nur optimierte Verfahrensschritte bei maximaler Arbeitsflächenausnutzung zulässt, sondern ebenso in jedem Verfahrenszeitpunkt einen bestmöglichen Schutz für den jeweilig anwendenden Schweißer bereitstellt. Dabei fungiert die Schutzhaube, als Kombination aus zumindest einer Seitenwand und einem Dach, vorzugsweise zunächst vorrangig als primäre Schutzvorrichtung der integrierten Elemente, wobei durch in der Innenseite der Schutzumhausung, auf Rolltoraufhängungen gelagerte Rolltorvorrichtungen einen unter der Schutzumhausung liegenden Arbeitsbereich vollständig umschließen und so den Schweißer vor schädlichen Effekten während des Schweißbetriebs abschotten kann. Die Schutzumhausung ist ferner auf einer pneumatisch anfahrbaren Führung an einem Grundrahmen gelagert, sodass sie zwischen einer ersten Position zur Umschließung eines ersten Arbeitsbereiches und zumindest einer zweiten Position zur Umschließung eines zweiten Arbeitsbereiches verfahren werden kann. Durch eine solche Konstruktion kann ein optimales Wechselschweißen, wie oben genannt, verwirklicht werden. Darüber hinaus kann die Führung vorzugsweise so konstruiert sein, dass der in zumindest einen der Arbeitsbereiche positionierte, durch mehrere Freiheitsgrade ansteuerbare Schweißroboter zumindest in einer Position von allen Seiten umschlossen werden kann, was nicht nur einen bestmöglichen Schutz, sondern auch einen für den Roboter größtmöglichen Arbeitsbereich sichert. Weitere Merkmale, wie etwa der modulierbare Schweißtisch, realisieren zudem eine individuell für den jeweiligen Schweißprozess benötigte Anpassungsmöglichkeit, welche durch eine mögliche Einteilung der Arbeitsbereiche in Teilarbeitsbereiche durch eine Kombination aus modulierbaren Rolltorvorrichtungen und Trennwänden weiter maximiert werden kann.

Eine solche Kompaktzelle bietet somit eine bestmögliche Individualisierung bei maximaler Kompaktheit und Transportierbarkeit. Zudem kann die Kompaktzelle vorzugsweise eine mobile Kompaktzelle sein, welche zum Transport zumindest eine Gabelstaplertasche umfasst, sodass insbesondere in einer der beiden Positionen der Schutzumhausung die Kompaktzelle durch die Gabelstaplertasche mit einem Hubwagen transportiert werden kann und so einen noch einfacheren Transport der Kompaktzelle ermöglicht. Bevorzugt können auch Räder an der Unterseite der Kompaktzelleverwendet werden.

### Kurzbeschreibung der Figuren

- **Figur 1A:**: zeigt eine erste Ansicht der erfindungsgemäßen Kompaktzelle mit der Schutzumhausung in der ersten Position
- **Figur 1B:**: zeigt eine Seitenansicht der Kompaktzelle
- **Figur 1C:**: zeigt eine Seitenansicht der Kompaktzelle mit der Schutzumhausung in der zweiten Position
- **Figur 2A:**: zeigt eine Ansicht der Kompaktzelle mit der Schutzumhausung in der ersten Position und einer Seite der Kompaktzelle sichtbar
- **Figur 2B:**: zeigt die Ansicht der Kompaktzelle der Fig. 2A mit der Schutzumhausung in der zweiten Position
- **Figur 3A:**: zeigt eine Draufsicht der Kompaktzelle ohne Dachkonstruktion und der Schutzumhausung in der ersten Position
- **Figur 3B:**: zeigt die Draufsicht der Fig. 3A mit der Schutzumhausung in der zweiten Position
- **Figur 4A:**: zeigt eine dreidimensionale Ansicht einer Ausführungsform der Kompaktzelle mit mehreren Rolltoren und Trennwänden und der Schutzumhausung in der ersten Position
- **Figur 4B:**: zeigt die dreidimensionale Ansicht der Ausführungsform der Fig. 4A mit der Schutzumhausung in der zweiten Position
- **Figur 5A:**: zeigt eine Draufsicht der Kompaktzelle der Fig. 4A ohne Dachkonstruktion und der Schutzumhausung in der ersten Position
- **Figur 5B:**: zeigt die Draufsicht der Kompaktzelle der Fig. 5A mit der Schutzumhausung in der zweiten Position
- **Figur 6A:**: zeigt eine Schnittansicht einer Ausführungsform längs der Seitenachse der Kompaktzelle zzgl. Rolltorvorrichtung
- **Figur 6B:**: zeigt eine Detailansicht der Führungsvorrichtung der Fig. 6A
- **Figur 6C:**: zeigt eine Ansicht einer Darstellungsform der Kompaktzelle abzüglich der Schutzumhausung
- **Figur 7:**: zeigt die Draufsicht einer weiteren Ausführungsform der Kompaktzelle ohne Dachkonstruktion mit einer linearen Führungsschiene des Schweißroboters
- **Figur 8A:**: zeigt eine Querschnittsansicht der linken Seite einer weiteren Ausführungsform der Kompaktzelle mit dem Schweißroboter auf einer exzentrischen Achse und der Schutzumhausung in der ersten Position
- **Figur 8B:**: zeigt die Querschnittsansicht der Fig. 8A mit der Schutzumhausung in der zweiten Position
- **Figur 9A:**: zeigt eine Querschnittsansicht der linken Seite einer weiteren Ausführungsform der Kompaktzelle mehreren Rolltoren und der Schutzumhausung in der ersten Position
- **Figur 9B:**: zeigt die Querschnittsansicht der Fig. 9a mit der Schutzumhausung in der zweiten Position
- **Figur 10**: zeigt eine Frontansicht einer weiteren Ausführungsform der Kompaktzelle mit dem Schweißroboter an einer an der Unterseite des Zellendaches befestigten Verbindungsvorrichtung
- **Figur 11**: zeigt eine dreidimensionale Ansicht der Ausführungsform der Fig. 10 mit der Schutzumhausung in der zweiten Position
- **Figur 12A**: zeigt eine Frontansicht einer weiteren Ausführungsform der Kompaktzelle mit dem Schweißroboter an einer an der Unterseite des Zellendaches angebrachten, linearen Führungsschiene.
- **Figur 12B**: zeigt eine Querschnittsansicht der rechten Seite der Ausführungsform der Fig. 12A mit der Schutzumhausung in der zweiten Position
- **Figur 12C**: zeigt eine Querschnittsansicht der rechten Seite der Ausführungsform der Fig. 12A mit der Schutzumhausung in der ersten Position
- **Figur 13A**: zeigt eine seitliche Darstellung einer weiteren Ausführungsform der Kompaktzelle mit drei Arbeitsbereichen hintereinander positioniert und der Schutzumhausung in der zweiten Position
- **Figur 13B**: zeigt die eine seitliche Darstellung der Ausführungsform der Schutzumhausung aus Fig. 13A
- **Figur 13C**: zeigt eine dreidimensionale Ansicht der Ausführungsform der Kompaktzelle aus Fig. 13A
- **Figur 13D**: zeigt eine dreidimensionale Ansicht einer weiteren Ausführungsform der Kompaktzelle mit drei Arbeitsbereichen hintereinander positioniert und einem auf den Arbeitsbereichen montierten Manipulator und der Schutzumhausung in der dritten Position
- **Figur 13E**: zeigt eine dreidimensionale Ansicht der Ausführungsform der Kompaktzelle aus Fig. 13D mit der Schutzumhausung in der zweiten Position
- **Figur 13F**: zeigt zwei Frontansichten der Ausführungsform der Kompaktzelle aus Fig. 13D mit der Schutzumhausung in der dritten (oben) und zweiten Position (unten)
- **Figur 14A**: zeigt eine Frontansicht der Ausführungsform der Kompaktzelle aus Fig. 13A mit der Schutzumhausung in einer dritten Position
- **Figur 14B**: zeigt eine dreidimensionale Darstellung der Ausführungsform der Kompaktzelle aus Fig. 14A.

### Detaillierte Beschreibung bevorzugter Ausführungsformen der vorliegenden Erfindung

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt. Insofern möglich, beziehen sich zudem gleichnamige Bezugszeichen über alle Figuren hinaus auf das gleiche Merkmal der Erfindung.

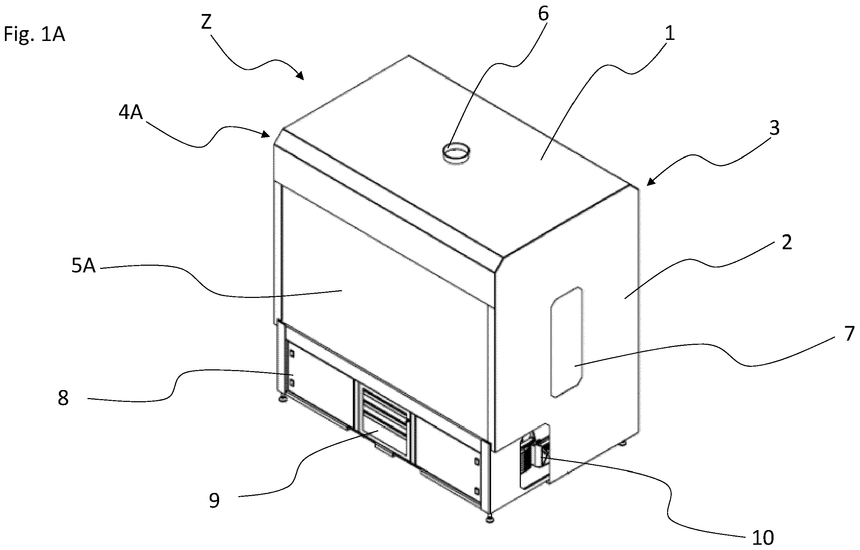

In Figur 1A ist die von außen zu erkennende Form einer ersten Ausführungsform der vorliegenden Kompaktzelle Z mitsamt der Schutzumhausung 3 dargestellt. Die Schutzumhausung 3 umfasst dabei ein Dach 1 sowie die Seitenwände 2, welche fest miteinander verbunden sind, und umschließt einen modularen Schweißtisch 8, welcher als Arbeitsfläche genutzt werden kann. Die Seitenwände 2 der Schutzumhausung 3 sind bevorzugt mit zumindest einem Fenster 7 zur Beobachtung der Schweißvorgänge im Inneren der Kompaktzelle Z versehen und das Dach 1 beinhaltet eine Absaugöffnung 6, durch welche schädlicher Schweißrauch mittels einer Absaugvorrichtung abgeleitet werden kann.

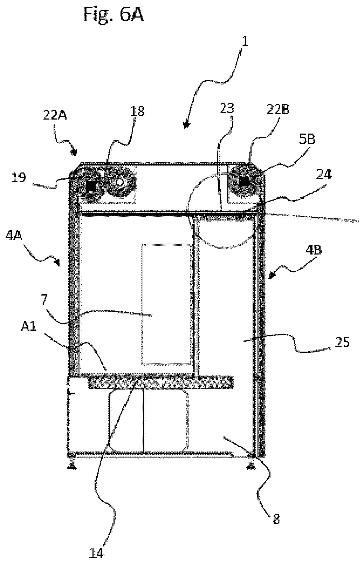

Darüber hinaus sind an der Vorder- und Rückseite 4A, 4B der Schutzumhausung 3 Rolltorvorrichtungen 22A, 22B (nicht in der Figur dargestellt, s. z.B. Fig. 6A) integriert, welche die Vorderseite 4A und Schutzumhausung 3 durch ein vorderes Rolltor 5A und deren Hinterseite 4B durch ein hinteres Rolltor 5B (nicht in dieser Figur dargestellt) bündig mit den Seitenwänden 2 schließen lassen können. Durch diese Konstruktion kann ein unter der Schutzumhausung 3 liegender Arbeitsbereich von allen Seiten umschlossen werden. Eine bevorzugt integrierte Sicherheitsvorrichtung (nicht dargestellt) verhindert indes bei Detektion von Elementen unter oder zwischen den Rolltoren 5A, 5B das Verfahren letzterer, sodass Schäden oder Verletzungen durch Einklemmvorfälle im regulären Arbeitsbetrieb unterbunden werden.

Der modulierbare Schweißtisch beinhaltet ferner eine für Werkzeug und Materialien geeignete Schubladenvorrichtung 9 sowie ein zusätzliches Schweißgerät 10, wodurch die in der Kompaktzelle Z verrichteten Schweißvorgänge weiter optimiert werden können.

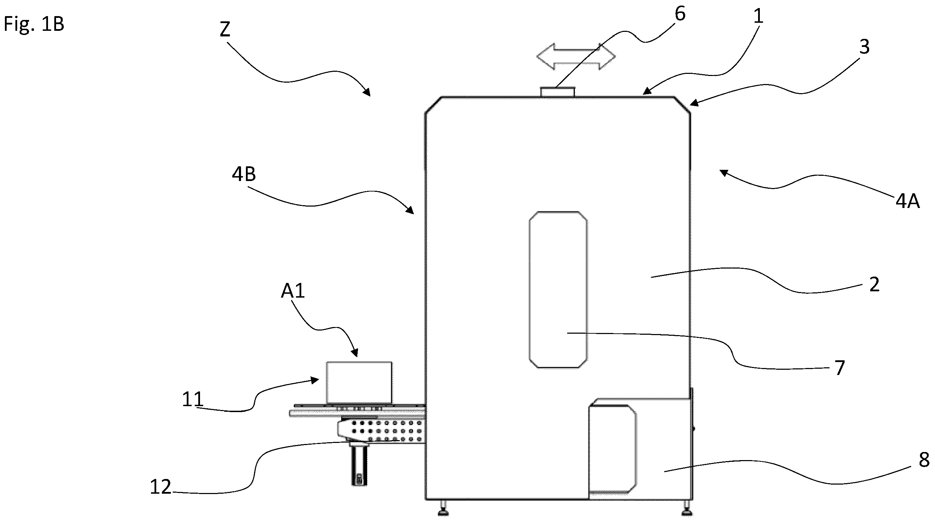

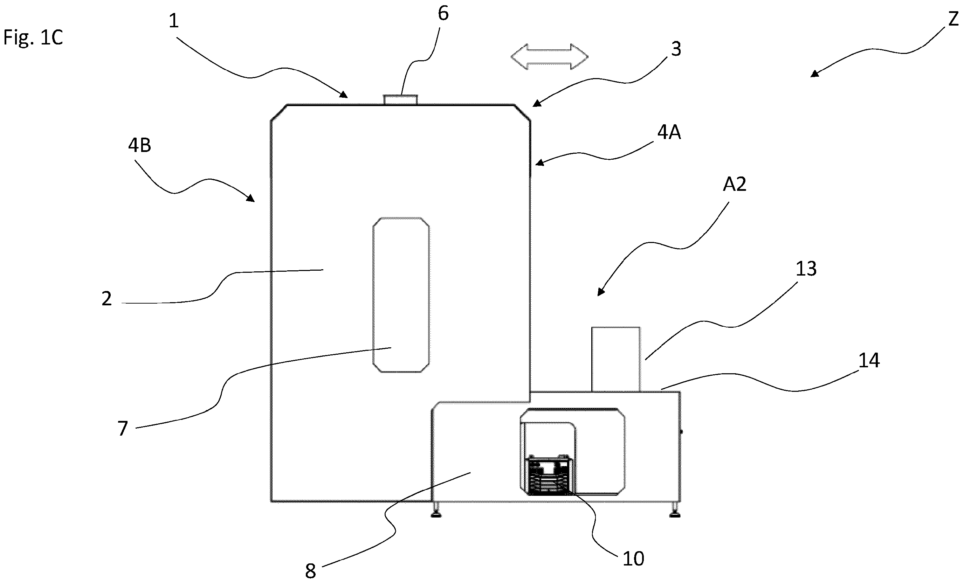

In Figur 1B und 1C werden die möglichen Positionen der Schutzumhausung3 sowie die dazugehörigen Arbeitsbereiche A1, A2 dargestellt. In Figur 1B befindet sich die Schutzumhausung3 in der ersten Position, wodurch der vordere Teil des modularen Schweißtisches 8 mitsamt des ersten Arbeitsbereiches A1 von allen Seiten von der Schutzumhausung 3 umschlossen werden kann und sich so ein für den Schweißer abgesicherter Schweißraum ausbildet. Dabei ist das Verfahren der Schutzumhausung 3 so konfiguriert, dass in der ersten Position der Schutzumhausung 3 ein hinterer Arbeitsbereich A2 vollkommen freiliegt und somit von dem Schweißer zur Vorbereitung oder individuellen Bearbeiten eines ersten Werkstücks 11, parallel zum Schweißbetrieb innerhalb der Schutzumhausung 3 genutzt werden kann. Der hintere Arbeitsbereich A2 umfasst in dieser Ausführungsform zudem eine justierbare, mit Rasterlöchern versehene Arbeitsplatte 12, welche für den optimierten Arbeitsablauf fest mit dem Schweißtisch 8 verbunden wurde.

Figur 1C zeigt die bereits in Figur 1B gezeigte Ausführungsform der Kompaktzelle Z, wobei die Schutzumhausung 3 nun in die zweite Position verfahren wurde. In diesem Fall befindet sich der hintere Arbeitsbereich A2 innerhalb der Schutzumhausung3 und kann somit durch Schließen der Rolltore 5A, 5B an der vorderen 4A und hinteren Seite 4B der Schutzumhausung 3 von allen Seiten umschlossen werden. Demgegenüber liegt in dieser Position der Schutzumhausung 3 der vordere Arbeitsbereich A1 frei und kann somit von dem Schweißer zum Bearbeiten oder Entnehmen eines zweiten Werkstücks 13 genutzt werden, wobei das erste Werkstück 11 im umschlossenen Arbeitsbereich A2 von einem Schweißroboter innerhalb der Schutzumhausung3 parallel verarbeitet werden kann. Durch diesen Positionswechsel der Schutzumhausung 3 lässt sich so ein optimiertes Wechselscheißverfahren realisieren, in dem ein Schweißer neben dem vom Roboter vollführten Schweißtätigkeiten jederzeit an einen der Arbeitsbereiche einen nächsten Arbeitsschritt tätigen oder vorbereiten kann. Weitere Integrationen, wie etwa das in dieser Ausführungsform gezeigte, im Schweißtisch 8 eingefügte Schweißgerät oder ein in der Tischplatte 14 eingefügtes Lochraster lassen zudem den jeweiligen Arbeitsbereich weiter individualisieren. Die Bezeichnung der ersten und zweiten Position ist ferner nicht auf die beispielhafte Zuordnung des Ausführungsbeispiels beschränkt. Auch eine umgekehrte Definition zwischen vorne und hinten bzw. erster und zweiter Position ist möglich. Bevorzugt ist ein Manipulator auf dem Lochrastertisch (Tischplatte 14) an verschiedenen Positionen frei positionierbar. Auch der kollaborative Roboter kann bevorzugt, zur einfachen Positionierung, auf dem Lochrastertisch vorgesehen sein. Das Lochrastersystem ist vorzugsweise ohne Gewinde und kann somit eine einfache Positionierung gewährleisten.

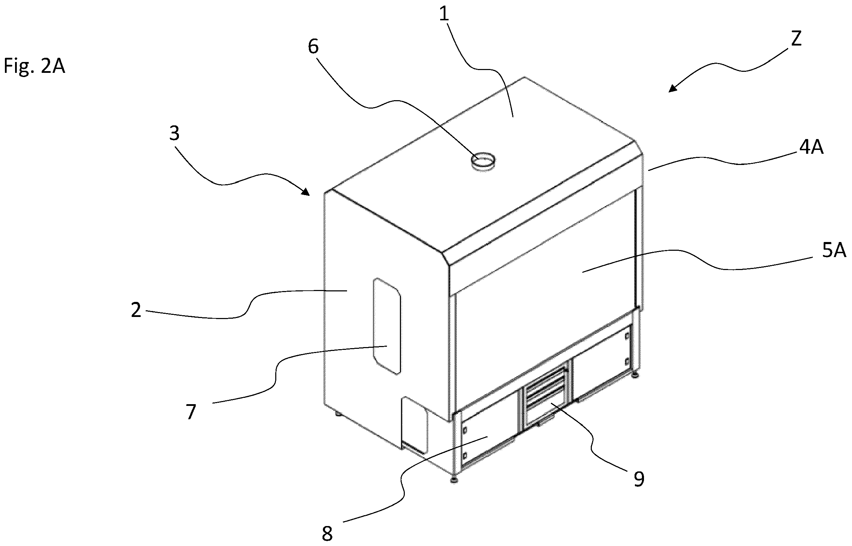

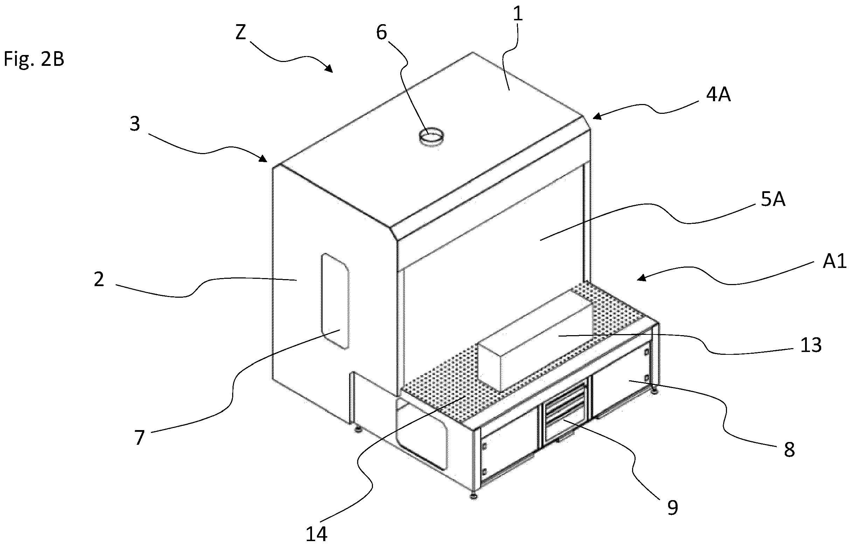

Die Figuren 2A und 2B zeigen die Vorteile der verfahrbaren Schutzumhausung 3, wobei in einer linksseitig gedrehten, dreidimensionalen Darstellung. In der Figur 2A ist die die zugleich Schutzhaube genannte Schutzumhausung 3 in der ersten Position gezeigt. Durch das geschlossene, bündig mit den Zellenseiten 2 und dem Schweißtisch 8 abschließende vordere Rolltor 5A kann eine nahezu quaderförmiger Aufbau bereitgestellt werden, welcher sich bestmöglich zum Transport oder zur Integration in ein bereits bestehendes System eignen lässt.

In der Figur 2B ist die Schutzumhausung 3 in der zweiten Position gezeigt, wodurch der vordere Arbeitsbereich A1 freiliegt. Die in dem modulierbaren Schweißtisch 8 eingefügte Lochrastertischplatte 14 kann dabei dazu genutzt werden das zu bearbeitende Werkstück 13 formgerecht zu positionieren oder etwaige Elemente zur Unterstützung der Schweißarbeiten zu integrieren. Der zudem entstehende Hohlraum zwischen Tischplatte 14 und Boden des Tisches 8 kann genutzt werden um weitere Vorrichtungen in den ersten Arbeitsbereich A1 einzufügen und den Arbeitsablauf so weiter zu optimieren. Die Schutzumhausung 3 in der zweiten Position kann ferner mögliche Öffnungen zu diesem Hohlraum umschließen, sodass integrierte Elemente optimal geschützt werden.

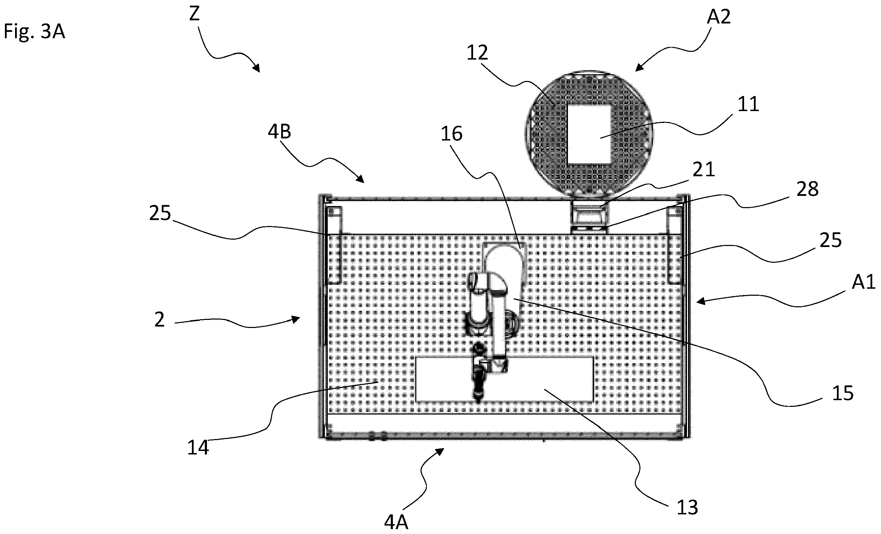

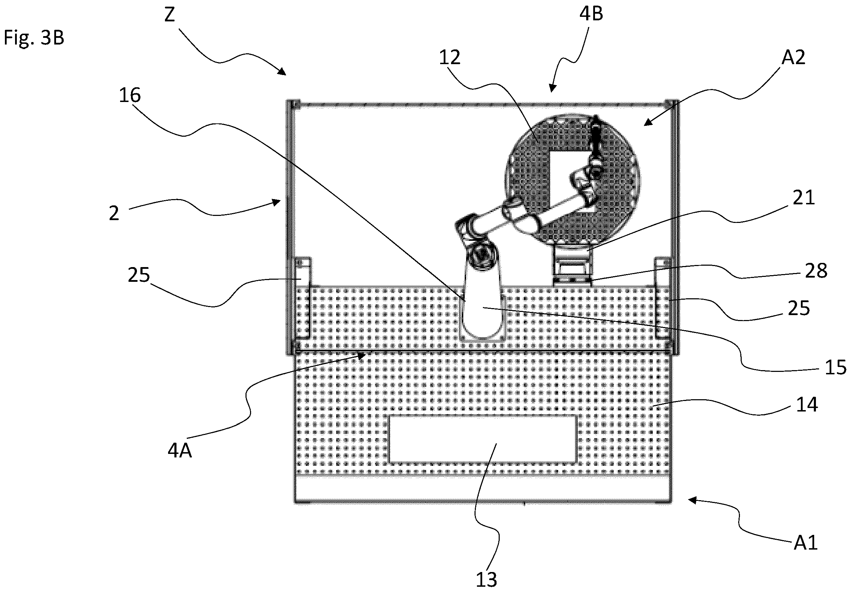

Die Figur 3A und 3B zeigen die inneren sowie Verbindungselemente der Kompaktzelle Z in einer Ausführungsform der Schweißroboterfixierung. Dabei ist in Figur 3A, welche die Kompaktzelle Z von oben mit der Schutzumhausung 3 in der ersten Position zeigt, der Schweißroboter 15 auf einer am Lochraster des Schweißtisches 8 fixierten Auflage 16 befestigt, sodass der Schweißroboter 15 durch an verschiedenen Armgelenken positionierten Manipulatoren im ersten Arbeitsbereich A1 beweglich ist, jedoch dessen Basis fest an einer Position des Tisches 8 verbleibt. Ferner erfolgt die Justierung der Schweißplatte 12 des zweiten Arbeitsbereiches A2 an den Schweißtisch 8 mithilfe eines bewegbaren Schwenkarms 21, welcher zur genauen Positionierung fest mit einem Verbindungselement 28 am Tisch 8 befestigt werden kann. Durch eine solche Vorrichtung kann die Arbeitsplatte 12 des zweiten Arbeitsbereiches A2 modular zum Schweißtisch 8 ausgetauscht und zu Transportzwecken eingeklappt oder ausgebaut werden, was die Kompaktheit und Effizienz der Kompaktzelle Z noch weiter steigert.

Figur 3B zeigt zudem die Ausführungsform der Figur 3A, wobei die Schutzumhausung3 in die zweite Position verfahren wurde. Die Schutzumhausung3 ist in diesem Fall so konfiguriert, dass sie in dieser Position sowohl den zweiten Arbeitsbereich A1 umschließen kann, als auch sich der Schweißroboter 15 samt Auflage 16 weiterhin in der Schutzumhausung 3 befinden. So lässt sich während des Verfahrens der Schutzumhausung 3 sowie in den beiden Endpositionen ein optimaler Schutz des Schweißenden realisieren. Die Bewegungsfreiheitsgrade des Schweißroboters 15 ermöglichen zudem eine freie Neupositionierung des Schweißkopfes vom zweiten Werkstück 13 des ersten Arbeitsbereiches A1 zum Werkstück 11 des zweiten Arbeitsbereiches A2, wodurch eine vereinfachte Umstellung des Arbeitsbetriebes von einem Arbeitsbereich in einen anderen gewährleistet werden kann.

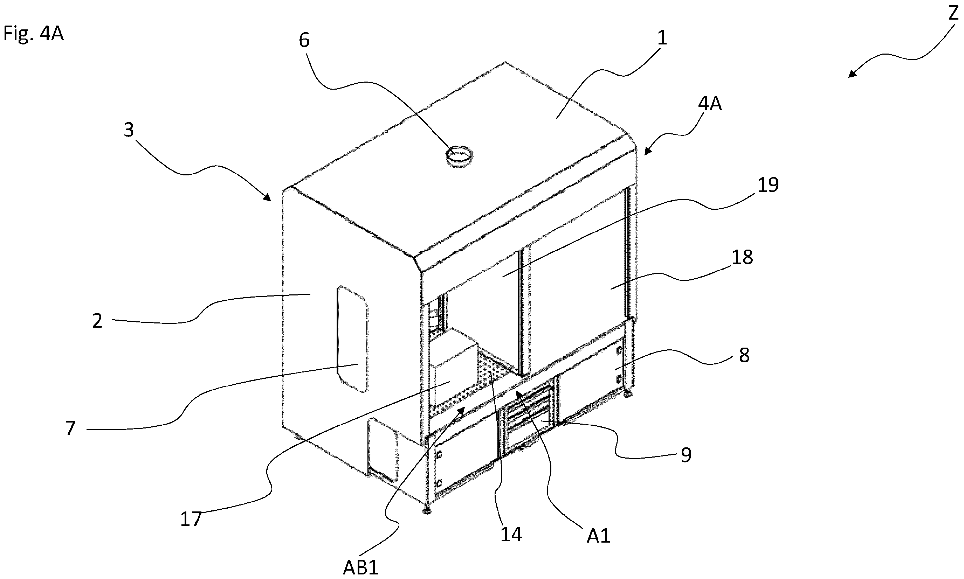

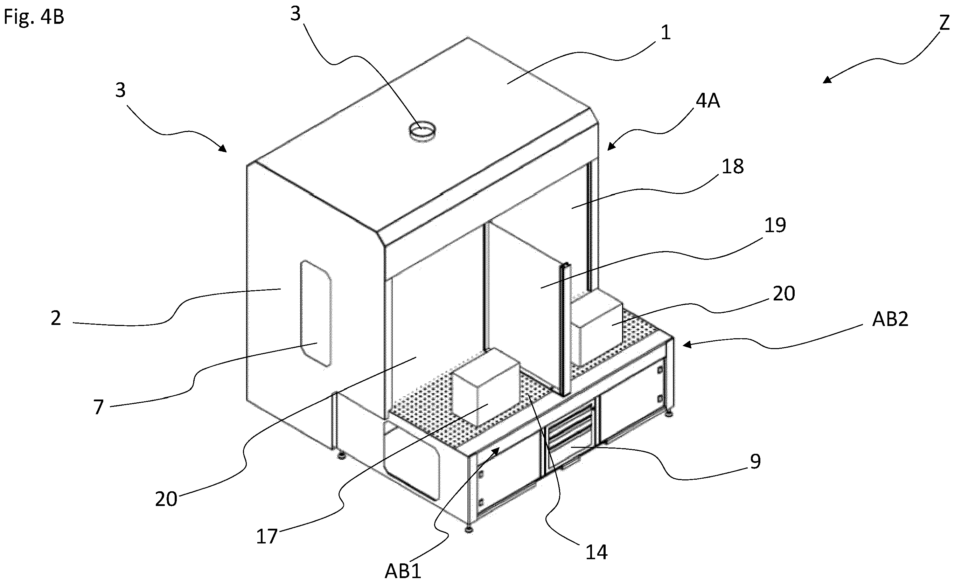

In Figur 4A und 4B ist darüber hinaus eine weitere Ausführungsform der Kompaktzelle Z abgebildet, in welchem der erste Arbeitsbereich A1 durch Einführung von unabhängig modulierbaren Rolltoren 18, 20 und einer Trennwand 19 in modulierbare Teilarbeitsbereiche AB1 und AB2 unterteilt werden können. Durch eine solche Konstruktion kann die vom Schweißroboter 15 bzw. dem Schweißer zu nutzende Arbeitsfläche weiter individualisiert werden, was zu einer optimalen Ausnutzung der jeweiligen Arbeitsbereiche A1, A2 führt.

In der in Figur 4A gezeigten Darstellung, in dem die Schutzumhausung 3 erneut in der ersten Position zu sehen ist, beinhaltet die vordere Seite der Schutzumhausung 3 beispielsweise zwei bevorzugt gleichgroße, unabhängig modulierbare Rolltore 18, 20, wobei lediglich das linke modulierbare Rolltor 18 geschlossen ist und mit einer zusätzlich mittig im Schweißtisch 8 eingelassene Trennwand 19, welche ebenso durch ein Rolltor realisiert werden kann, zu einem abgetrennten, zusätzlichen Teilarbeitsbereich AB2 des Schweißroboters modifiziert wird. Das geöffnete, rechte Rolltor 20 ermöglicht hingegen eine parallelisierte Arbeit des Schweißers, z.B. an einem dritten Werkstück 17, in dem rechten Teilarbeitsbereich AB1, wodurch in dieser Ausführungsform in der ersten Position der Schutzumhausung 3 eine beidseitige Arbeit (am Teilarbeitsbereich AB1 und dem hinteren Arbeitsbereich A2), d.h. eine Parallelisierung mehrerer Schweißarbeiten zugleich ermöglicht wird. Ferner lassen sich in dieser Ausführungsform die einzelnen modulierbaren Rolltore 18, 20 und Trennwände 19 verbinden, wieder trennen und unabhängig voneinander öffnen und schließen, sodass ein optimaler Zugriff zu einzelnen Teilarbeitsbereichen AB1, AB2 bzw. Arbeitsbereichen A1, A2 gewährleistet ist.

Die Figur 4B stellt wiederum die Ausführungsform der 4A erneut mit der Schutzumhausung 3 in der zweiten Position dar, wobei in diesem Fall sowohl das linke Rolltor 18, als auch das rechte modulierbare Rolltor 20 geschlossen ist. Die weiterhin existente Trennwand 19 bildet dabei wiederholt zwei Teilarbeitsbereiche AB1, AB2 aus, die jedoch in diesem Fall durch die Umschließung des zweiten Arbeitsbereiches A2 samt Schweißroboter 15 durch die Schutzumhausung 3 klar von der entsprechenden Roboterarbeitsfläche abgegrenzt werden. Somit lassen sich in dieser Ausführungsform selbst zwei, oder, bei entsprechender Anzahl Trennwände, mehr Teilarbeitsplätze für von einem Schweißer durchzuführende Schweißarbeiten realisieren.

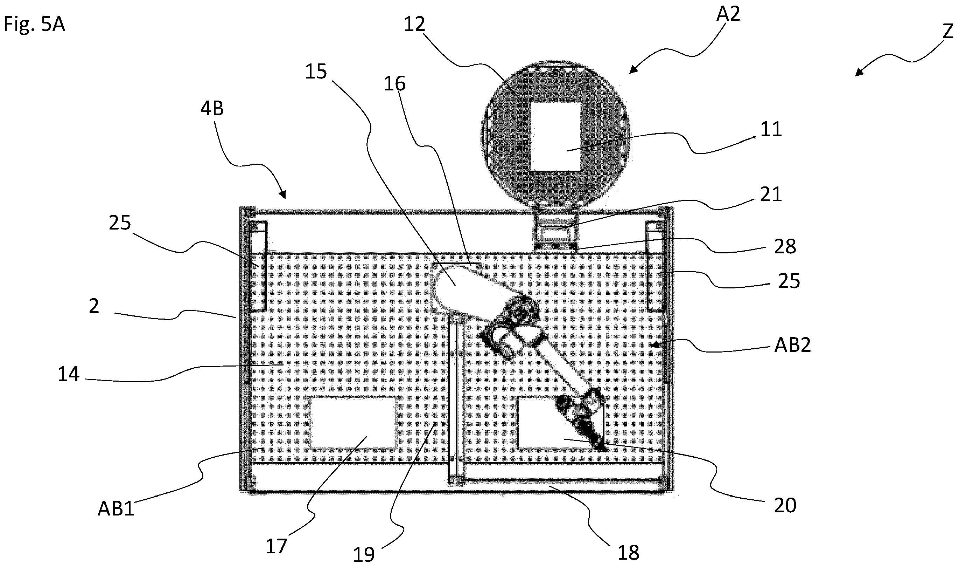

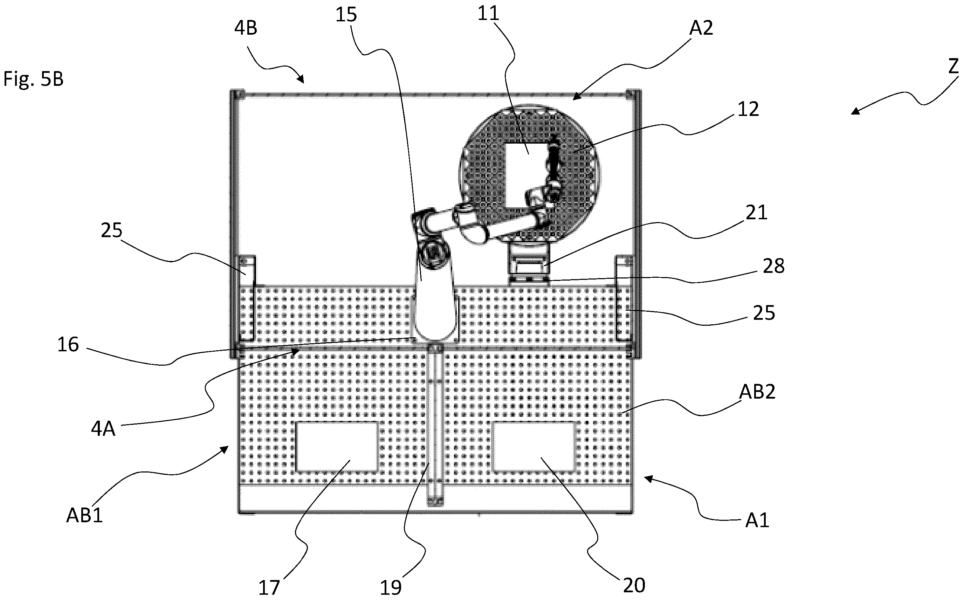

Die Figuren 5A und 5B spezifizieren als Draufsicht der in den Figuren 4A und 4B dargestellten Ausführungsform die Position und Funktion des Schweißroboters 15 gegenüber den oben genannten modularen Rolltoren 18, 20 und der Trennwand 19.

In Figur 5A ist ein Schweißroboter 15 samt Auflage 16 gemäß der auf S. 13, Z. 26 bis S. 14, Z. 21 genannten Funktionen gezeigt, welcher in die in der Figur 4A illustrierten Rolltorkonstellation positioniert wurde. Dabei ist die Auflage 16 des Schweißroboters 15 so an die Tischplatte 14 befestigt, dass zwischen Schweißroboter 15 und der Trennwand 19 die kleinste Distanz herrscht, in der der Schweißroboter dennoch den gesamten Raum des durch die Trennwand 19 und das linke Rolltor 18 eingeschlossenen Teilarbeitsraumes AB2 erreichen kann. Gleicherma-ßen kann die dargestellte Ausführungsform auch so konstruiert werden, dass der Schweißroboter 15 zwischen den beiden Teilarbeitsbereichen AB1, AB2 verfahren kann, wobei die Trennwand 19 zum Schutz des Schweißers auf der vom Schweißroboter 15 momentan nicht genutzten Teilarbeitsbereichsseite, über alle Schweißvorgänge bestehen bleibt. In diesem Fall lässt sich somit ein äußerst kompaktes, lediglich auf einer Seite zu nutzendes Wechselschweißverfahren realisieren, in welchem Schweißer und Schweißroboter 15 stetig zwischen dem ersten AB1 und dem zweiten Teilarbeitsbereich AB2 wechseln können. Ein solches Verfahren ist zum Beispiel vom Vorteil, falls zur gleichen Zeit am zweiten Arbeitsbereich A2 eine weitere Schweißarbeit vorbereitet wird und somit die Schutzumhausung3 nicht von der ersten in die zweite Position verfahren werden kann.

Figur 5B zeigt die individuelle Modifikation des Schweißbetriebes anhand des gleichen Schweißroboters 15, eingebracht in die durch die Figur 4B dargestellte Ausführungsform. Da der Schweißroboter 15 unabhängig im zweiten Arbeitsbereich A2 schweißen und Werkstücke 11, 13, 17 durch Öffnen und Schließen der modularen Rolltüren 18, 20 ebenso unabhängig voneinander durch verschiedene Schweißer austauschbar sind, lässt sich durch eine solche Vorrichtung, insbesondere durch die im vorderen Arbeitsbereich A1 eingebrachte Trennwand 19, auch ein 2-Mann-Wechselschweißsystem ohne Probleme verwirklichen.

In der Figur 6A, die einen seitlichen Querschnitt der Kompaktzelle Z mit der Schutzumhausung 3 in der ersten Position zeigt, sind zudem die Rolltorvorrichtungen 22A, 22B zum Öffnen und Schließen der an der Vorderseite 4A gelegenen modularen Rolltore 18, 20 und dem an der Rückseite 4B gelegenen Rolltor 5B der Schutzumhausung 3 gemäß der in den Figuren 4A, B und 5A, B gezeigten Ausführungsform dargestellt. Hierbei sind die jeweiligen Rolltore 18, 20, 5B zunächst auf einer im Dach 1, bzw. in den Hohlraumstrukturen 29A, 29B des Daches 1 integrierten Rolltoraufhängung V1, V2, V3 befestigt, sodass diese während des Verfahrens der Schutzumhausung3 oder des generellen Schweißablaufes, möglichst geschützt gelagert werden können. Ein Motor (nicht in der Figur dargestellt) mit einer mit den Rolltorvorrichtungen 22A, 22B verknüpften Kontrolleinheit steuert dabei das Öffnen und Schließen der Rolltore 18, 20, 5B.

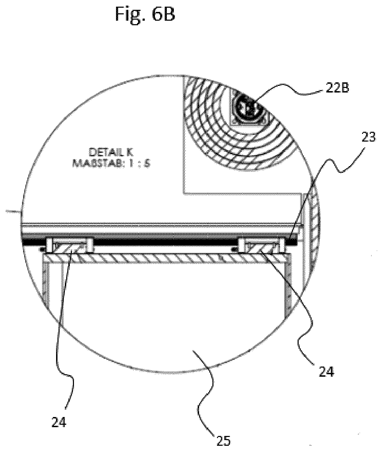

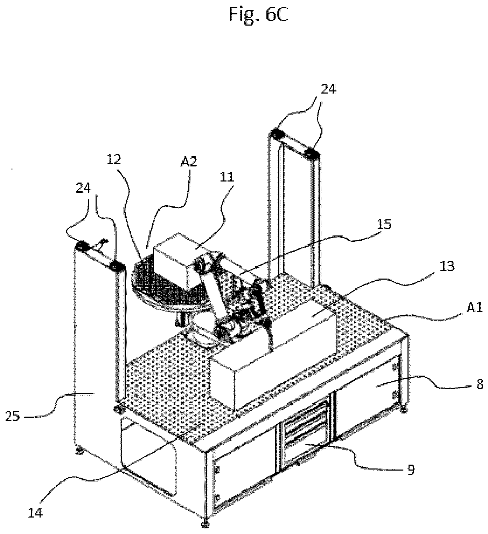

Ferner ist in Figur 6A die zum Verfahren der Schutzumhausung 3 genutzte Führungsstruktur dargestellt, welche gleichermaßen in Figur 6B in vergrößerter Weise aufgezeigt. Zum genauen Verfahren der Schutzumhausung 3 sind zwei lineare Führungsschienen 23 längs der Frontachse der Schutzumhausung 3 an die Unterseite des Daches 1 bzw. auf der Unterseite des oben genannten Hohlraumstrukturenrahmens befestigt, wobei die Länge der Führungsschienen 23 die Verfahrlänge der zugeordneten Schutzumhausung 3 definiert. Selbige Führungsschienen 23 sitzen zudem jeweils auf zwei pneumatisch ansteuerbare Führungsvorrichtungen 24 auf, welche zum Verfahren der Schutzumhausung3 von der ersten in die zweite Position und zurück die Schutzumhausung 3 über die Führungsschiene 23 in die jeweilige Richtung versetzen. Zur verbesserten Stabilisierung der Verfahrmechanik sind die jeweiligen Führungsvorrichtungen zudem fest mit einem Grundrahmen 25 und über eine weitere Konnexion des Grundrahmens 25 an die jeweilige Seitenwand des Schweißtisches 8, ebenso beidseitig mit dem letztgenannten Schweißtisch 8 verbunden. Durch einen solchen Aufbau kann insbesondere das Verfahren der Schutzumhausung 3 optimal stabilisiert werden, wobei die Kompaktheit der Kompaktzelle Z durch den eng an dem Schweißtisch 8 anliegenden Grundrahmen 25 erhalten bleibt, In Figur 6C, welche die Ausführungsform der Figuren 1 bis 3 der Kompaktzelle Z in dreidimensionaler Ansicht und ohne Schutzumhausung 3 zeigt, wird die Struktur des Grundrahmes 25 zudem detaillierter dargestellt. Dabei ist der Grundrahmen 25 beidseitig fest mit den jeweiligen Außenseiten des Schweißtisches 8 verbunden und bildet an den hinteren Enden des Schweißtisches 8 Balkenstrukturen aus, welche zur zusätzlichen Stabilisierung an den hinteren Ecken des Schweißtisches 8 aufliegen und die Höhe der jeweiligen Schutzumhausung 3 definieren. Sinngemäß sind auf den oberen Enden der Balkenstruktur die pneumatischen Führungsvorrichtungen 24 zum Verfahren der aufliegenden Schutzumhausung 3 angebracht, sodass beim Auflegen der Führungsschiene 23 der Schutzumhausung 3 das Verfahren letzterer von der Stabilität der Grundrahmens 25 weiter profitiert.

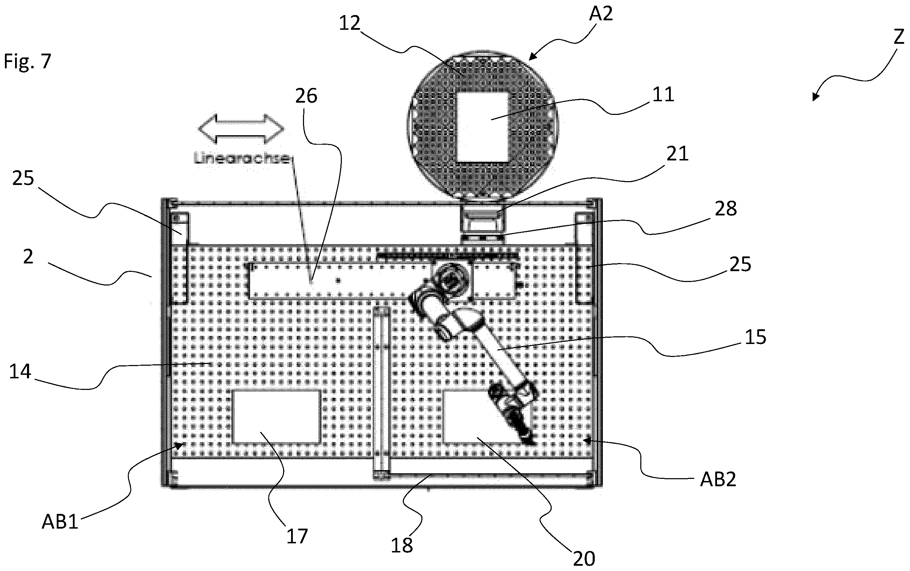

Die Figur 7 zeigt eine weitere Ausführungsform der Kompaktzelle Z in Draufsicht, wobei die Schutzumhausung 3 in der ersten Position dargestellt und mit der bereits in der Figur 4A bzw. 5A illustrierten Rolltorstruktur versehen wurde. Insbesondere ist der Schweißroboter 15 in diesem Fall auf einer linearen, zur Längsachse des Schweißtisches 8 parallelen Führungsschiene 26 justiert, sodass er vereinfacht zwischen den beiden Teilarbeitsbereichen AB1, AB2 des ersten Arbeitsbereiches A1 verfahren und die einzelnen Bereiche der Teilarbeitsbereiche AB1, AB2 bzw. Werkstücke 13, 17 verbessert erreichen kann. Zudem ist die mit der Führungsschiene 26 verbundene Auflage 30 des Schweißroboters 15 drehbar gelagert, wodurch eine ebenso vereinfachte Annäherung an den zweiten Arbeitsbereich A2 bzw. das dort gelagerte Werkstück 11 im Falle eines Positionswechsels der Schutzumhausung 3 realisiert werden kann. Eine mit dem Motor der Führungsschiene 26 verbundene Kontrolleinheit (nicht gezeigt) ermöglicht darüber hinaus einen programmierbaren Arbeitsablauf des Schweißroboters 15.

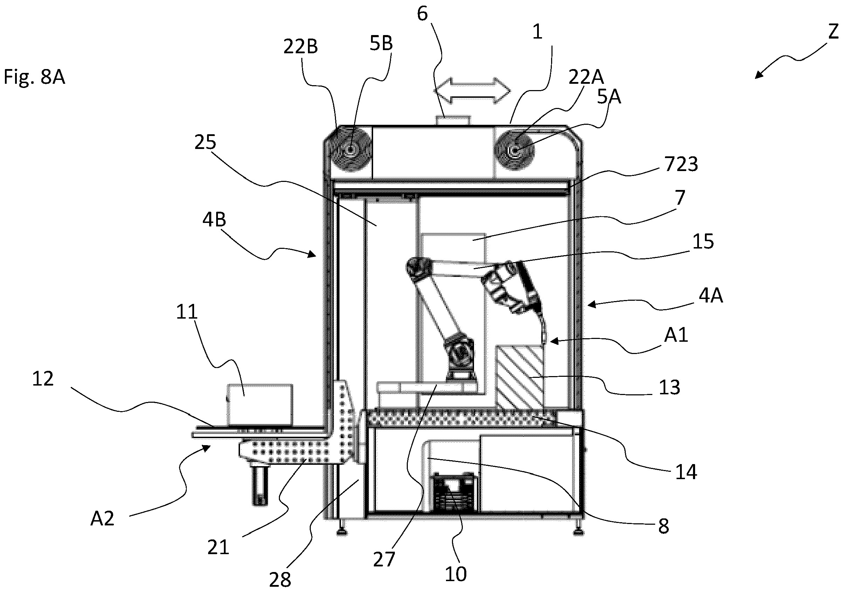

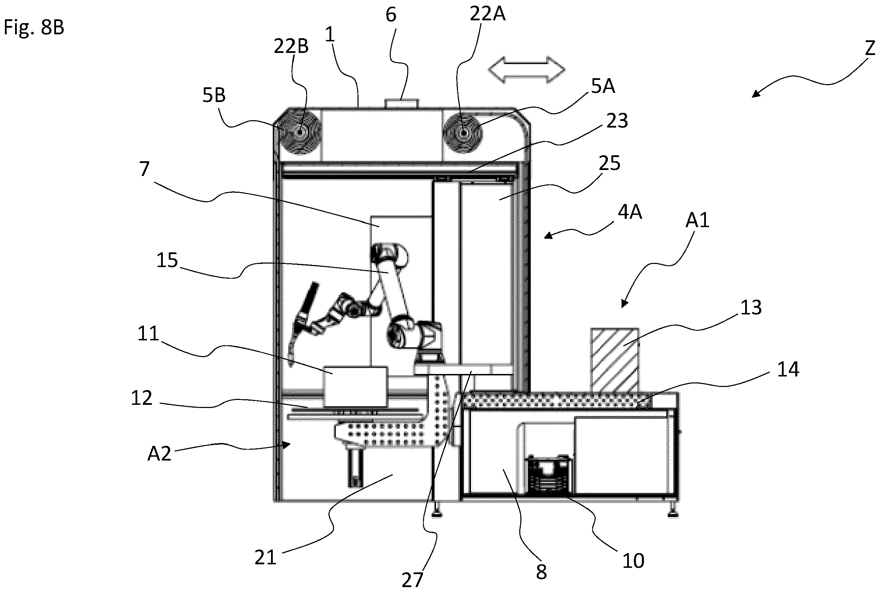

In den Figuren 8A und 8B wird ferner eine weitere Ausführungsform der Schweißroboterauflage 27 innerhalb einer Seitenansicht der bereits in Figur 1-3 dargestellten Ausführungsform der Schutzumhausung 3 dargestellt, wobei die Schutzumhausung 3 in Figur 8A in der ersten und in Figur 8B in der zweiten Position verbleibt. In dieser Ausführungsform ist der Schweißroboter 15 auf einer exzentrisch gelagerten und am Schweißtischplatte 14 befestigten Drehachsenauflage 27 justiert, sodass der Schweißroboter 15, als zusätzlichen Freiheitsgrad auch in Richtung der Vorder- bzw. Rückseite 4A, 4B der Schutzumhausung 3 verfahrbar ist und somit noch präziser und vereinfachter an das jeweilige Werkstück 11, 13 herangeführt werden kann. Gleichermaßen kann gegenüber einer festen, linearen Führungsschiene 26, wie in Figur 7 dargestellt, die zu nutzende Arbeitsfläche mithilfe einer exzentrischen Drehachse 27 noch effektiver genutzt werden, was die dargestellte Ausführungsform gegenüber den zuvor gezeigten noch weiter optimiert.

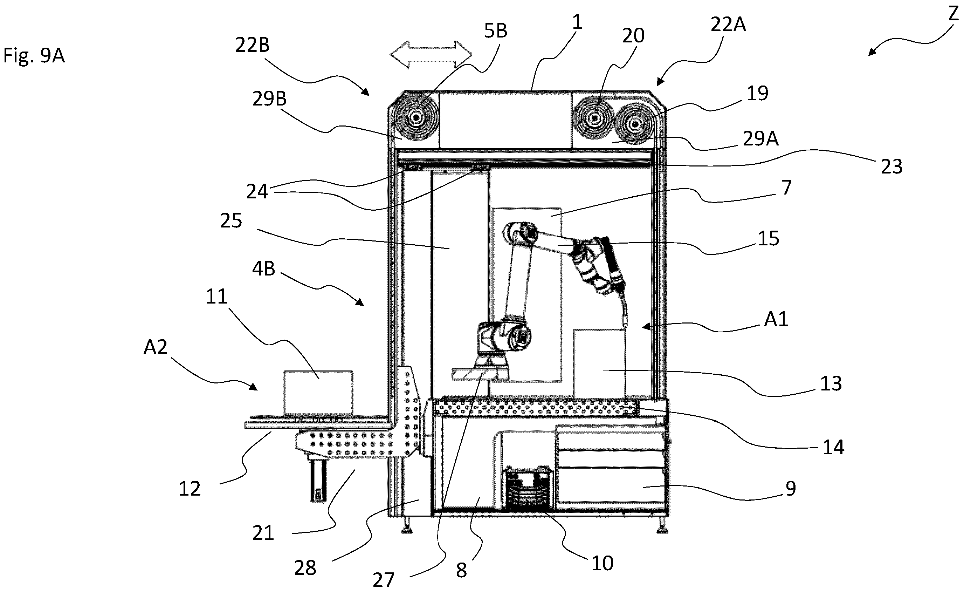

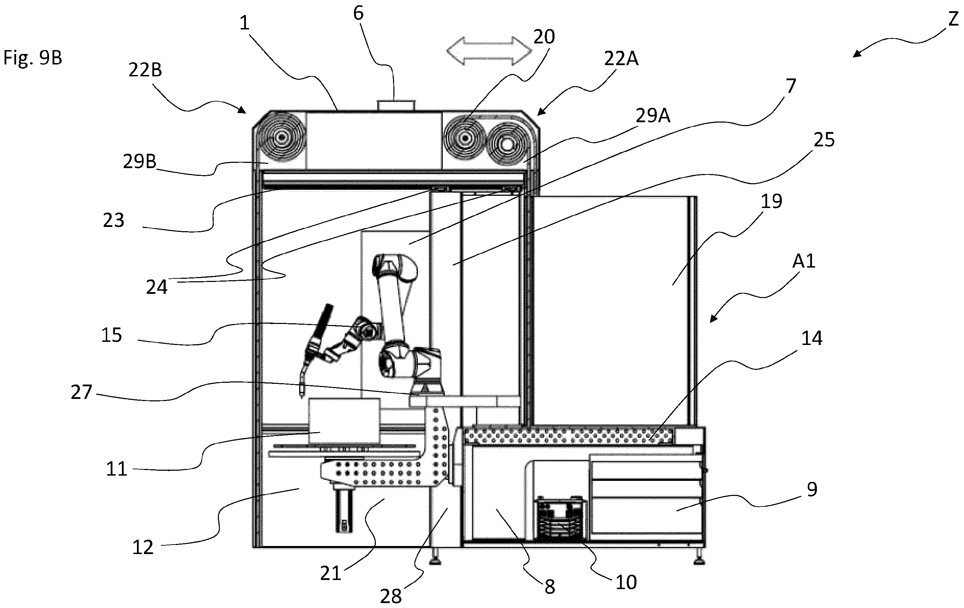

Die Figuren 9A und 9B zeigen zudem die in den Figuren 8A und 8B dargestellte Ausführungsform der Schweißroboterauflage 27 in der mit modularen Rolltoren 18, 20 versehenen Ausführungsform der Schutzumhausung 3, wie bereits in den Figuren 4A, B und 5A, B illustriert, wobei Figur 9A die entsprechende Schutzumhausung 3 in der ersten Position und Figur 9B dieselbe in der zweiten Position zeigt. In diesem Fall kombinieren sich die hohe Modulierbarkeit der Arbeitsbereichseinteilung durch die individuell zu positionierenden Rolltore 18, 20, 5B mit der präzisen Ansteuerung des Schweißroboters 15 an die Werkstücke 11 durch die exzentrische gelagerte Auflagendrehachse 27. Ferner beeinträchtigt keine der dargestellten Ausführungsformen das Verfahren Schutzumhausung 3 in Richtung der ersten oder zweiten Position, was gleichermaßen die hohe Modulierbarkeit der gezeigten Erfindung aufzeigt.

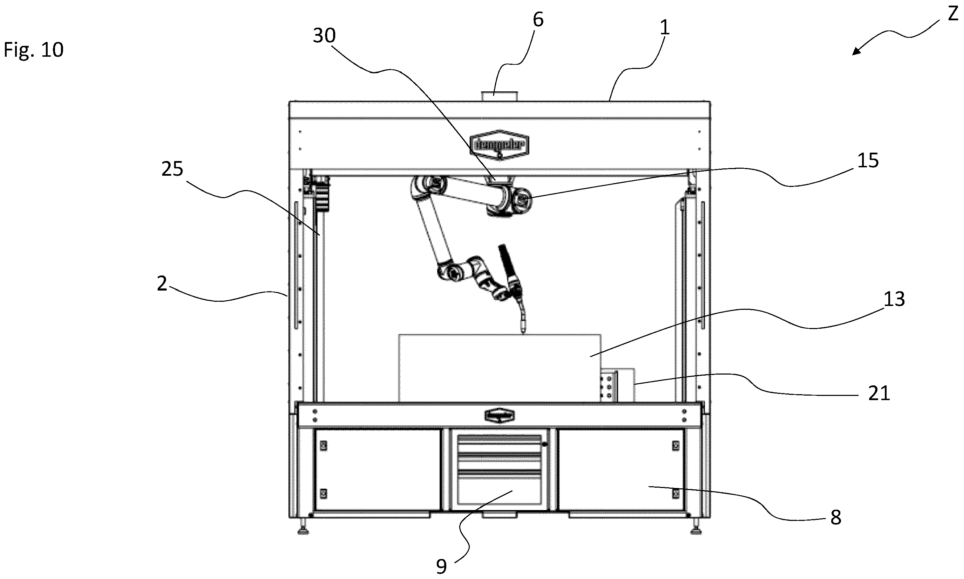

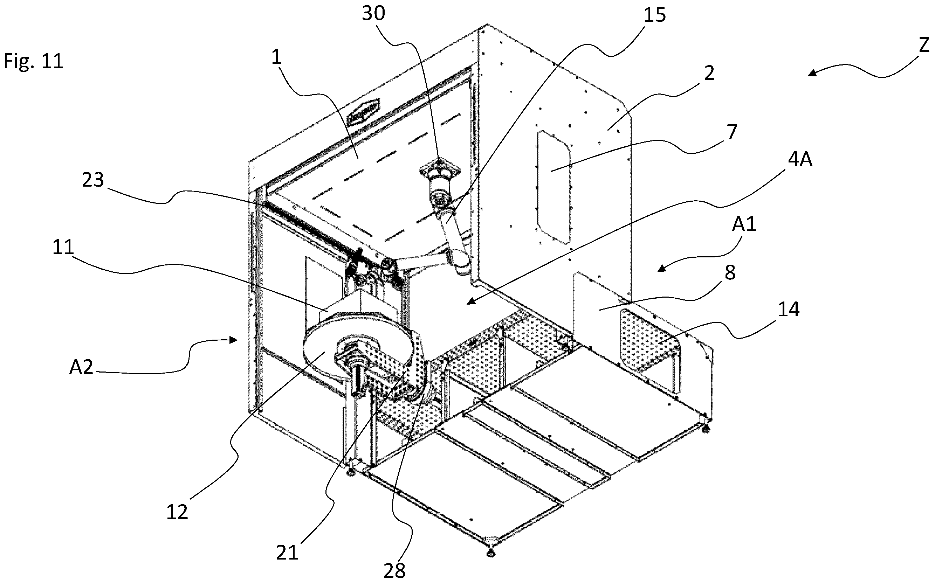

Die Figuren 10 und 11 beschreiben eine weitere Ausführungsform der Kompaktzelle Z, in der innerhalb der bereits in den Figuren 1 und 2 dargestellten Ausführungsform der Schutzumhausung 3 der Schweißroboter 15 durch eine am Zellendach 1 fest angebrachte Verbindungsvorrichtung 30 oberhalb des Schweißtisches positioniert werden kann.

Die Figur 10 zeigt dabei eine Frontansicht der oben genannten Ausführungsform, wobei insbesondere durch die Positionierung des Schweißroboters 15 oberhalb des zu bearbeitenden Werkstücks 13, eine verbesserte Zugänglichkeit des letzteren gegenüber dem Schweißroboter 15 gewährleistet und somit die Präzision der hiermit zusammenfallenden Schweißarbeiten weiter optimiert werden kann. Darüber hinaus ergibt sich in dieser Ausführungsform der Vorteil, dass der Schweißroboter 15, durch das Anbringen an die bewegbare Schutzumhausung 3, mit der Schutzumhausung3 mitverfahren werden kann, wodurch sich nicht nur etwaige Restriktionen der Bewegung der Schutzumhausung um die Position eines fest fixierten Schweißroboters 15 umgehen lassen, sondern der Schweißroboter 3 ebenso mithilfe einer an der Schutzumhausung 3 angebrachten Steuerungseinheit noch genauer an das jeweilige Werkstück 11, 13, 17 herangebracht werden kann.

Figur 11 zeigt zudem die in Figur 10 beschriebene Ausführungsform in einer dreidimensionalen, vom Boden der Kompaktzelle Z angeführten Darstellung. Insbesondere wird in dieser Darstellungsform die Position der Verbindungsvorrichtung 30, an welchem der Schweißroboter 15 mit dem Zellendach 1 verbunden ist, noch einmal genauer verdeutlicht. Ferner lässt sich erkennen, dass durch das Anbringen des Schweißroboters 15 an die Schutzumhausung 3 mehr Arbeitsfläche auf dem Schweißtisch 8 realisieren lässt, wodurch sich das Arbeits-zu-Zellenflächenverhältnis der Kompaktzelle Z noch einmal optimieren lässt.

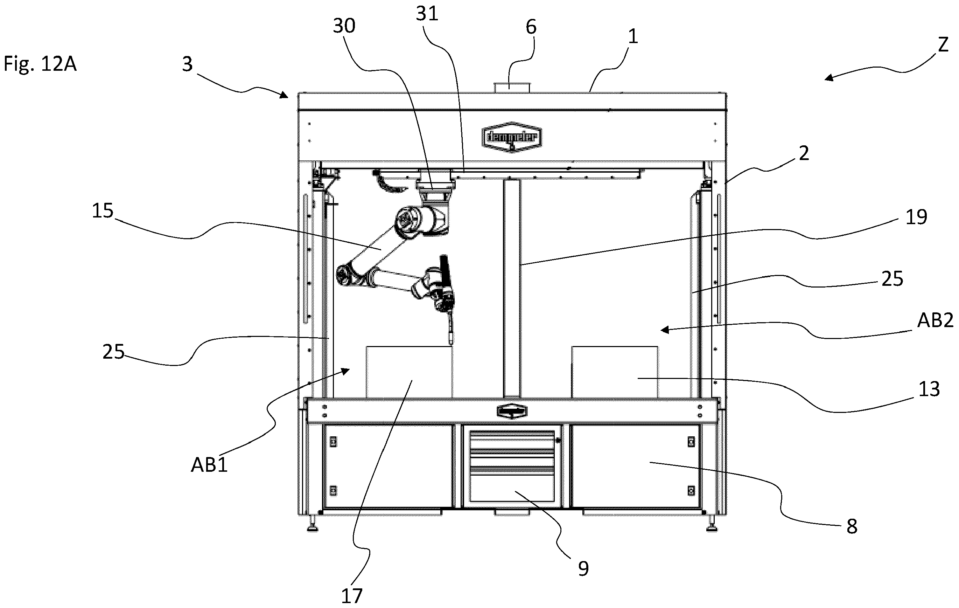

Die Figuren 12 A - C beschreiben eine weitere Ausführungsform der Schweißroboterpositionierung, in der der Schweißroboter 15 über eine Verbindungsvorrichtung 30 zusätzlich mit einer am Dach der Schutzumhausung 3 angebrachten, linearen Führungsschiene 31 verbunden ist und mit der bereits in Fig. 4 und 5 gezeigten Ausführungsform der Schutzumhausung 3 samt Schweißtisch 8 kombiniert wurde.

In Figur 12A wird dabei die Frontansicht dieser Kompaktzelle Z dargestellt, wobei der Schweißroboter 15 über die parallel zum vorderen Rolltor ausgerichtete, lineare Führungsschiene 31, zwischen den beiden Teilarbeitsbereichen AB1, AB2 verfahren werden kann und somit optimiert die durch die Trennwand 19 voneinander separierten Werkstücke 13, 17 erreicht. Darüber hinaus ergeben sich durch die Positionierung der Schweißroboters 15 an das Zellendach 1 der Schutzumhausung 3 gleichermaßen die Vorteile, dass die auf dem Schweißtisch 8 vorhandenen Arbeitsflächen der Teilarbeitsbereiche AB1, AB2 nicht zusätzlich durch die durch den Schweißroboter 15 oder die zugehörige Führungsschiene 31 verkleinert werden und der Schweißroboter 15 durch das Mitverfahren während der Bewegung der Schutzumhausung3 noch präziser an das jeweilige Werkstück herangeführt werden kann.

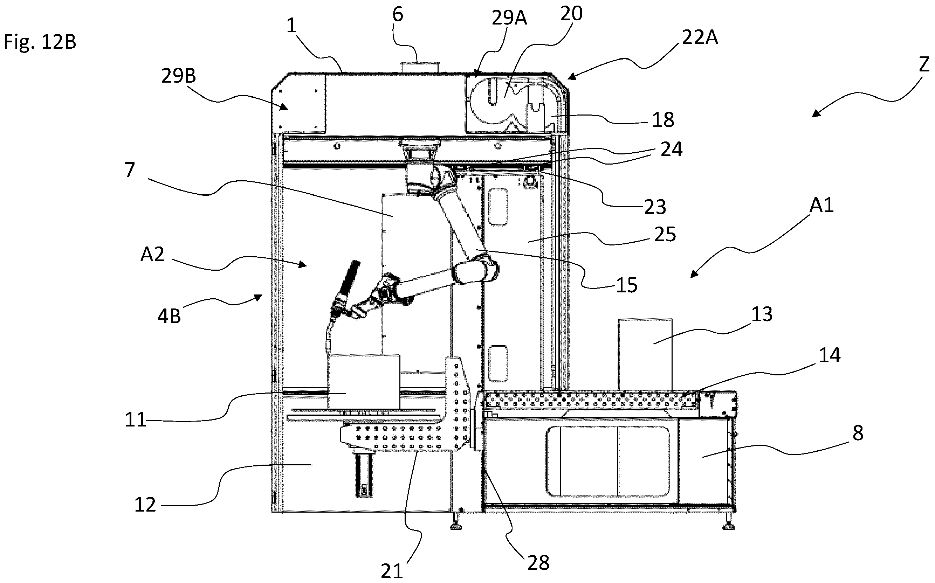

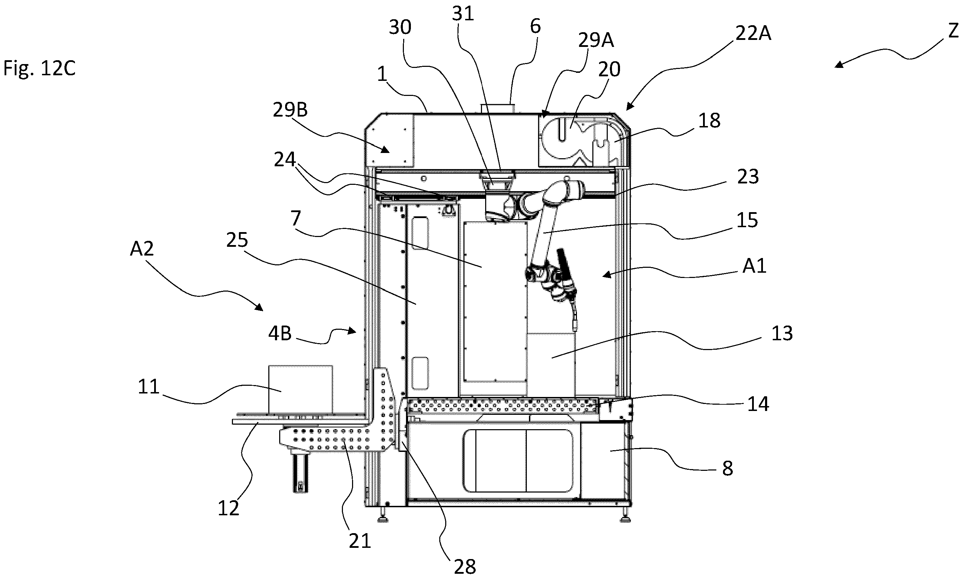

Die Figuren 12B und 12C beschreiben hingegen einen seitlichen Querschnitt der bereits in Figur 12A angeführten Ausführungsform der Kompaktzelle Z, wobei Figur 12B die Schutzumhausung 3 in der zweiten Position und Figur 12C dieselbe Vorrichtung mit der Schutzumhausung in der ersten Position zeigt. Neben den bereits genannten Vorteilen wird hier insbesondere ersichtlich, dass das Verfahren der Schutzumhausung3 in dieser Ausführungsform durch die Geometrie des Grundrahmens 25 bzw. der Größe der Führungsschiene 23 definiert wird und damit keine weiteren Restriktionen (z.B. eine maximale Verfahrlänge aufgrund auf dem Schweißtisch 8 fixierter Elemente) aufweist. Somit ließen sich durch diese Ausführungsform auch größere oder gar geometrisch frei modellierbare Kompaktzellen Z realisieren.

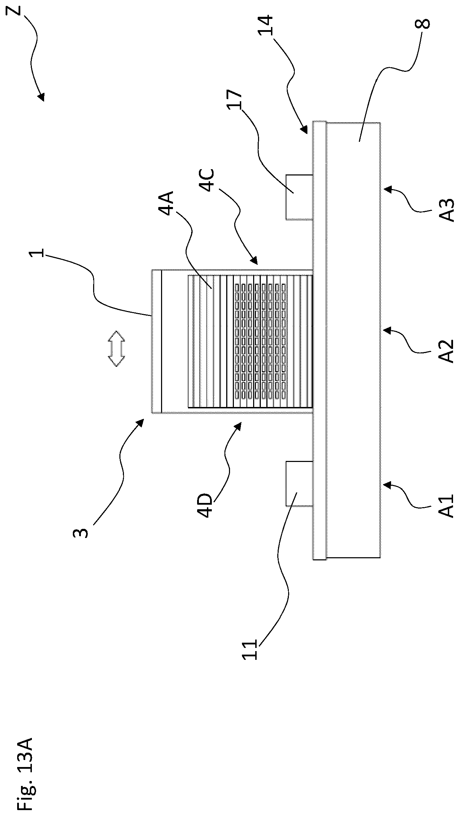

Die Figuren 13A - C stellen eine weitere Ausführungsform der Kompaktzelle Z dar, in welcher die auf Seite 23, Z. 8ff genannte Ausführung der Schutzumhausung 3 samt dem am Zellendach 1 angebrachten Schweißroboters 15 mit einem aus drei Arbeitsbereichen A1, A2, A3 bestehenden Schweißtisch kombiniert wurde.

Die Figur 13A zeigt hierbei die Ausführungsform der Kompaktzelle Z in der Seitenansicht mit der Schutzumhausung 3 in der zweiten Position, d.h. den zweiten Arbeitsbereich A2 umschließend. Entgegen den vorherigen Ausführungsformen sind die Arbeitsbereiche A1, A2, A3 in diesem nicht durch zwei oder mehrere Schweißplatten definiert, sondern sind hintereinander gegliedert und ineinander überlaufend auf einem einzelnen Schweißtisch 8 zu finden. Dabei beschreibt der erste Arbeitsbereich A1 erneut bezogen auf die Vorderseite 4A (siehe z.B. Fig. 12C) der Schutzumhausung 3 den vorderen Arbeitsbereich A1 der Kompaktzelle Z und der zweite A2 bzw. dritte Arbeitsbereich A3 jeweilig den mittleren bzw. hinteren Arbeitsbereich der Erfindung.

Ferner ist der oben genannte Grundrahmen 25 bzw. die Führungsvorrichtung 24 in diesem Fall so konfiguriert, dass die Schutzumhausung 3 nacheinander von einer ersten Position zur Umschließung des ersten Arbeitsbereiches A1 über eine zweite Position zur Umschließung des zweiten Arbeitsbereiches A2 bis zumindest zu einer einer dritten Position zur Umschließung des dritten Arbeitsbereiches A3 und zurück verfahrbar ist, sodass durch die Bewegung der Schutzumhausung 3 zumindest jeder Bereich des unter der Schutzumhausung 3 liegenden Schweißtisches 8 einmal umschlossen werden kann und gerade nicht umschlossene Bereiche frei liegen. Dies hat den Vorteil, dass eine beliebige Anzahl an Arbeitsbereichen zur Verfügung stellen kann und somit nicht nur ein bzw. zwei Schweißarbeiter zusätzlich parallel zum Schweißroboter Werkstücke 11, 13, 17 vorbereiten bzw. bearbeiten können, sondern die Kompaktzelle Z je nach Anforderung des jeweiligen Schweißauftrags beliebig zusammengesetzt werden kann. Bevorzugt kann das Verfahren der Schutzumhausung 3 auch durch eine Kontrolleinheit genauer definiert werden, sodass die Positionen der Schutzumhausung 3 vor den jeweiligen Schweißarbeiten jederzeit neu definiert werden können.

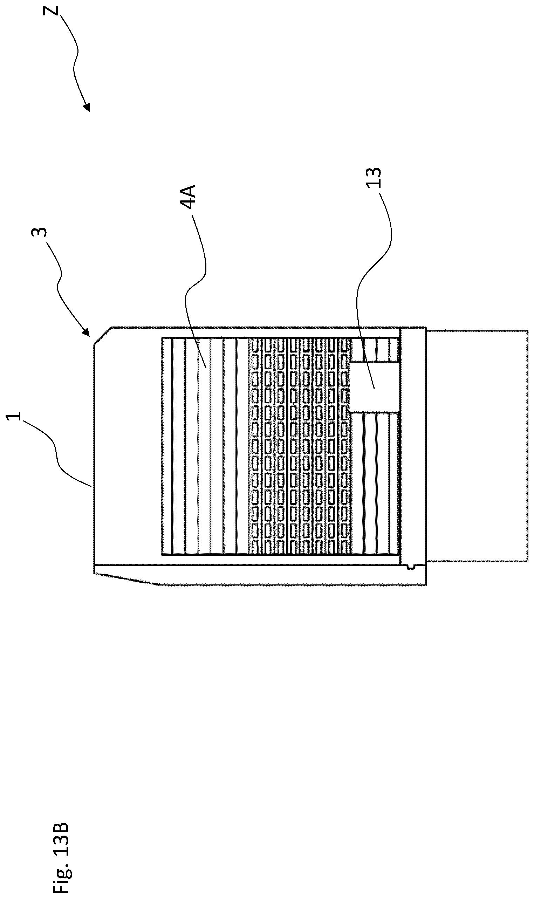

Figur 13B beschreibt zudem die Schutzumhausung 3 dieser Ausführungsform genauer. Dabei können die jeweiligen Rolltore 5A, 5B, 5C auch Schutzvorhänge 32A, 32C umfassen, sodass im heruntergefahrenen Zustand der Rolltore 5A, 5B, 5C der Schutz der Schweißer gewährleistet, jedoch gleichzeitig eine Betrachtungsmöglichkeit in das Innere der Schutzumhausung 3 ermöglicht wird. Ferner können sich diese Schutzvorhänge (oder auch Rolltorgitterstrukturen) 32A, 32B bevorzugt automatisch schließen, wenn der im Inneren der Schutzumhausung 3 befindliche Schweißroboter 15 eine Schweißarbeit tätigt, sodass Funkensprünge oder eventuelle Schweißrauchaustritte komplett unterbunden werden können.

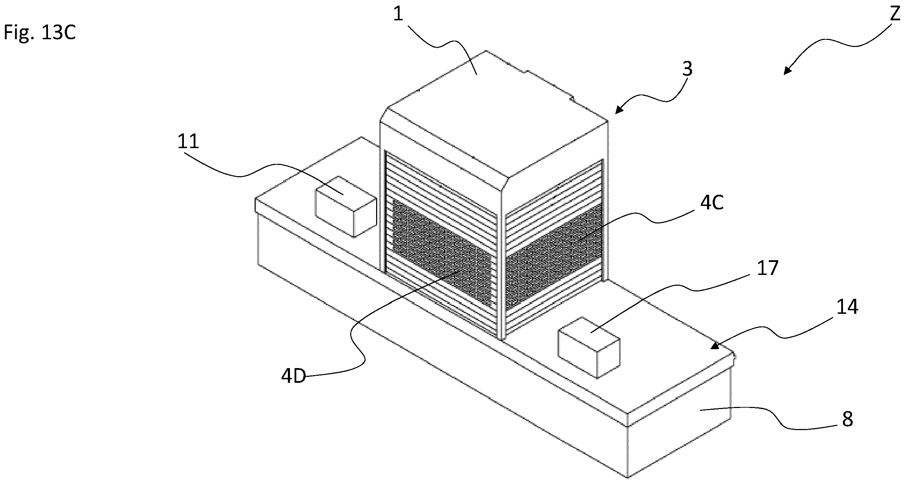

In Figur 13C ist zudem eine dreidimensionale Visualisierung der gleichen Ausführungsform gezeigt, wobei die Rolltore 5A, 5C der Schutzumhausung 3 weiterhin geschlossen sind. Insbesondere wird hier ersichtlich, dass die Kompaktzelle in dieser Ausführungsform von jeder Seite bedient und die zugehörige Schutzumhausung 3 durch zumindest ein Rolltor 5A, 5C an drei von vier Seiten der Schutzumhausung 3 erschlossen werden kann. Somit bietet diese Vorrichtung eine optimierte Zugänglichkeit, insbesondere im Falle von parallele Schweißarbeiten mittels Schweißroboter 15.

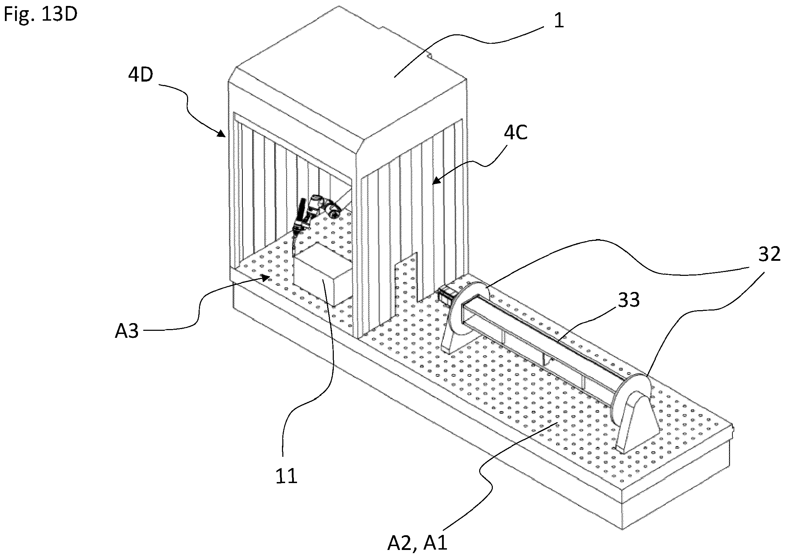

Die Figuren 13D - F beschreiben eine weitere Ausführungsform der Kompaktzelle Z mit drei Arbeitsbereichen A1, A2, A3, wobei in diesem Fall zusätzlich eine längs der Längsachse der Schweißtischplatte 14 ausgerichtete, auf dem ersten und zweiten Arbeitsbereich positionierte Aufnahme mit Manipulator 32 angebracht wurde.

In der Figur 13D ist diese Ausführungsform in einer dreidimensionalen Ansicht mit der Schutzumhausung 3 in der dritten Position, d.h. über den dritten Arbeitsbereich A3 gezeigt. Der Manipulator 32 besitzt in diesem Fall eine für die Einspannung eines Werkstücks 33 vorgesehene, hier längs der langen Seite der Schweißtischplatte 14 ausgerichtete Rotationsachse, die das Werkstück 33 drehbar lagert und somit für den Schweißroboter 15 während des Schweißbetriebs von allen Seiten zugänglich macht. Dabei sind die Formen und Freiheitsgrade des Manipulators 32 nicht auf die in den Figuren 13D - F gezeigten Darstellung beschränkt. So kann der Manipulator 32 in einer weiteren Ausbildung das Werkstück 33 bevorzugt auch translatorisch gegenüber seiner ursprünglichen Position verschieben oder in mehr als einer Achse drehen und so eine optimale Bearbeitung des letzteren durch den Schweißroboter 15 gewährleisten. Zudem können auch mehrere Manipulatoren 32, bevorzugt auch auf mehreren Schweißtischplatten 14 realisiert werden.

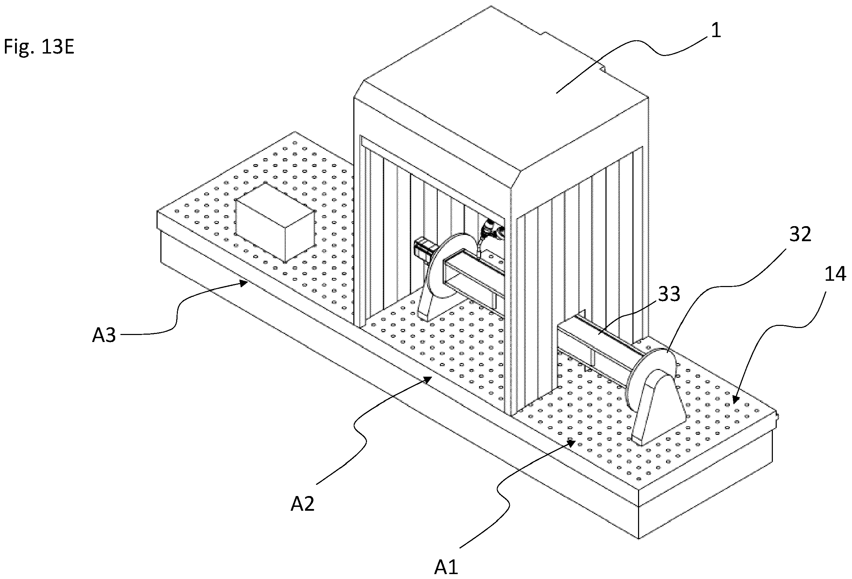

Darüber hinaus sind die Seitenwände 4C, 4D der Schutzumhausung 3 zum optimierten Verfahren der Schutzumhausung 3 und zum Schutz des Manipulators 32 vor etwaigen Kontaktschäden mit formleichten Schweißervorhängen versehen, sodass speziell beim Bewegen der Schutzumhausung 3 von einem Arbeitsbereich A3 ohne Manipulator 32 (siehe Fig. 13D) zu einem mit einem Manipulator 32 versehenen Arbeitsbereich A1, A2, wie in Figur 13E gezeigt, es nicht möglich ist das im Manipulator 32 eingebrachte Werkstück 33 selbst bei heruntergelassenen Seitenwänden 4C, 4D zu beschädigen. Bevorzugt können zudem in einer Weiterentwicklung dieser Schutzumhausung 3 an die Form des Manipulators 32 bzw. des Werkstücks 33 angelehnte Öffnungen oder Öffnungsluken an den Seitenwänden 4C, 4D angebracht sein, wodurch die Umschließung des Manipulators bzw. des Werkstücks 33 32 oder von Teilen der letzteren gänzlich ohne Kontakt mit der Schutzumhausung 3 durchgeführt werden kann.

Mithilfe eines solchen Aufbaus, speziell aufgrund des integrierten Manipulators 32, ist es somit möglich die Werkstücke 33 noch genauer durch den Schweißroboter 15 zu bearbeiten. Darüber hinaus können aufgrund der modular verstellbaren Arbeitsbereiche A1, A2, A3, sowie der frei wählbaren Größe des Manipulators 32, auch Teilbearbeitungsschritte an einem, gleichen Werkstück 33 vollbracht werden.

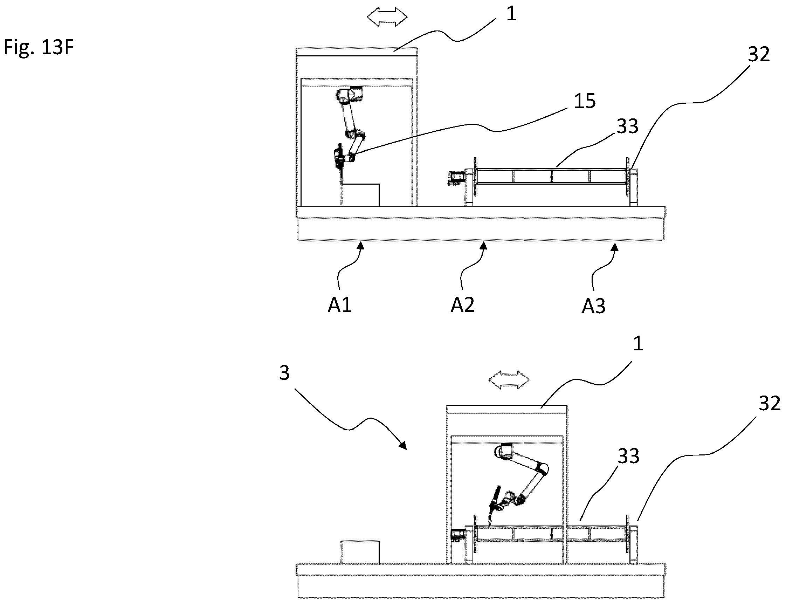

Durch die Abbildungen der Figur 13F, in welcher die bereits in Abbildung 13D und 13E dargestellten Ausführungsformen erneut als Frontansicht gezeigt werden, lässt sich dies noch einmal genauer zeigen: Da das im Manipulator 32 eingebrachte Werkstück, z.B. durch Verfahren der Schutzumhausung 3 in die zweite Position (Fig. 13F, unten), nur zum Teil durch die Schutzumhausung 3 umschlossen und somit auch nur teilweise von dem am Dach 1 montierten Schweißroboter 15 bearbeitet werden kann, bleibt dem Schweißer weiterhin die Möglichkeit die noch freien Anteile des Werkstücks 33, beispielsweise im ersten Arbeitsbereich A1, vorzubereiten und weiter zu modifizieren. So lassen sich auch parallelisierte Schweißprozesse bei größeren Werkstücken durchführen und selbst komplexe Bearbeitungsschritte, die einen mehrstufigen Vorbereitungs- oder Behandlungsprozess an einem Werkstück benötigen, problemlos realisieren.

In Figur 13E dargestellte Schutzumhausung umfasst vier Seiten wobei an zwei Seiten ein Schweißvorhang vorgesehen ist und an den anderen zwei Seiten jeweils eine Rolltorvorrichtung. Die Zellenseitenwand kann daher bei dieser Weiterbildung von einer Rolltorvorrichtung oder Schweißvorhang gebildet werden, sodass eine einfache Zugänglichkeit von allen Seiten der Schutzumhausung möglich ist Die Schutzumhausung ist bei dieser Weiterbildung als bewegliches/verschiebbares Portal auf vier Säulen ausgebildet wobei zwischen diesen Säulen bevorzugt jeweils eine Rolltorvorrichtung und/oder ein Schweißvorhang vorgesehen sein kann.

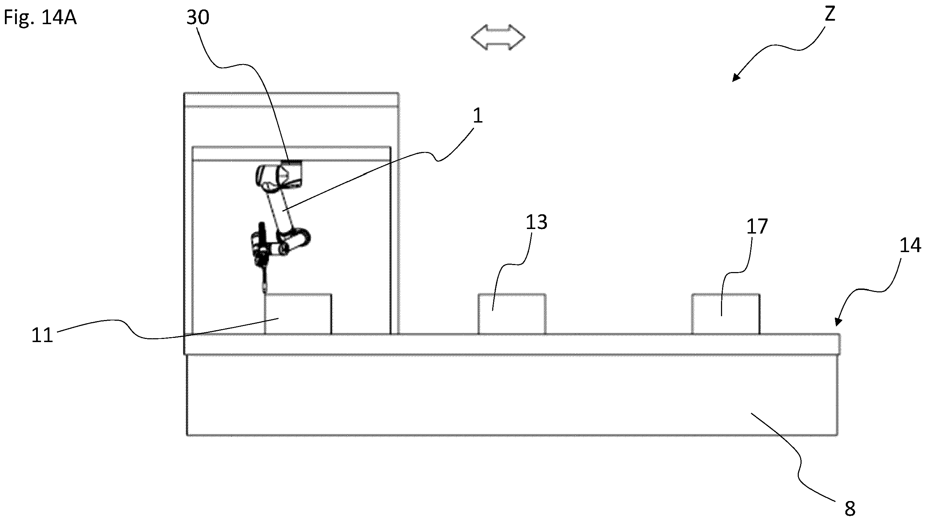

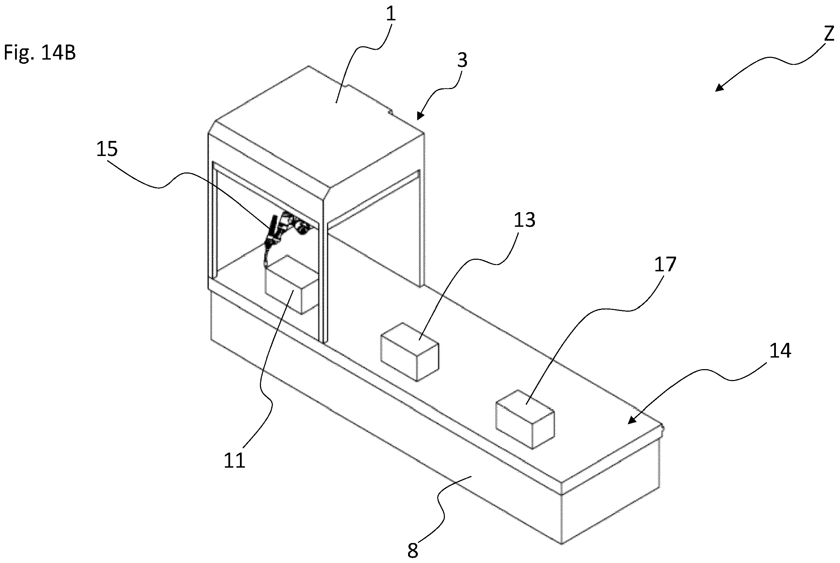

Die Figuren 14A und 14B beschreiben ferner die bereits in den Figuren 13 A - C dargestellte Ausführungsform der Kompaktzelle Z, wobei in diesem Fall die drei Rolltore 5A, 5C der Schutzumhausung geöffnet wurden und die Schutzumhausung 3 auf die dritte Position bzw. über den dritten Arbeitsbereich A3 verfahren wurde. Aufgrund der Positionierung des Schweißroboters 15 mittels Verbindungsvorrichtung 31 am Zellendach 1, kann hierbei das Werkstück 11 erneut optimal bearbeitet werden, während durch das zusätzliche Mitverfahren des Schweißroboters 15 durch die Schutzumhausung 3 der Schweißroboter 15 nach Abschluss der Arbeit in einen anderen Arbeitsbereich A1, A2 positioniert werden kann. Bevorzugt kann dieses Verfahren automatisiert, z.B. durch die oben genannte Kontrolleinheit (nicht gezeigt) realisiert werden, sodass eine optimierte Arbeitskette ermöglicht werden kann. Somit realisiert diese Ausführungsform der Kompaktzelle Z eine optimale Zugänglichkeit der einzelnen Arbeitsbereiche in Kombination mit der Möglichkeit parallele Schweißarbeiten beliebig zu erweitern und zu automatisieren.

## Patentansprüche

1. Kompaktzelle (Z) mit einer Schutzumhausung (3) für Schweißvorgänge und/oder Schneidvorgänge mittels Schweißroboter (15), wobei die Kompaktzelle (Z) umfasst:
- ein Zellendach (1) und zumindest eine Zellenseitenwand (2), wobei die Zellenseitenwand (2) mit dem Zellendach (1) verbunden ist;
- die Schutzumhausung (3), welche zumindest das Zellendach (1) und die zumindest eine Zellenseitenwand (2) umfasst; und
- zumindest einen ersten (A1) und einen zweiten Arbeitsbereich (A2) für Schweißvorgänge;,
**dadurch gekennzeichnet, dass**
die Schutzumhausung (3) zumindest bidirektional verfahrbar ausgestaltet ist und in einer ersten Position den ersten Arbeitsbereich (A1) umschließt und den zweiten Arbeitsbereich (A2) freigibt und in einer zweiten Position den zweiten Arbeitsbereich (A2) umschließt und den ersten Arbeitsbereich (A1) freigibt.

2. Kompaktzelle (Z) nach zumindest einen der vorhergehenden Ansprüche, wobei die Schutzumhausung (3) zumindest eine Rolltorvorrichtung (22A; 22B) aufweist, und die Rolltorvorrichtung (22A; 22B) in einer geöffneten Stellung den Zugriff auf den von der Schutzumhausung (3) umschlossenen Arbeitsbereich (A1; A2; A3) ermöglicht und in einer geschlossenen Stellung den Arbeitsbereich (A1; A2; A3) für einen Schweißvorgang abschließt.

3. Kompaktzelle (Z) nach zumindest einen der vorhergehenden Ansprüche, wobei ein Schweißroboter (15) mitverfahrbar an der Schutzumhausung (3) aufgenommen ist, insbesondere am Zellendach (1) und/oder an der Zellenseitenwand (2) und wobei der Schweißroboter bevorzugt ein kollaborativer Roboter ist.

4. Kompaktzelle (Z) nach zumindest einen der vorhergehenden Ansprüche,
wobei die Schutzumhausung (3) angrenzend an die Zellenseitenwand (2) zumindest eine Zellenvorderseite (4A) mit einer vorderen Rolltorvorrichtung (22A) und eine Zellenrückseite (4B) mit einer hinteren Rolltorvorrichtung (22B) aufweist, und
wobei die Schutzumhausung (3) zumindest teilweise, durch die vordere und/oder hintere Rolltorvorrichtung (22A; 22B) abschließbar ist.

5. Kompaktzelle (Z) nach Anspruch 1,
wobei die Schutzumhausung (3) zumindest eine Rolltorvorrichtung (22A; 22B) und/oder einen Schweißroboter (15) aufweist welche im Zellendach (1) und/oder an Zellenseitenwänden (2) aufgenommen sind und die Schutzumhausung (3) in der geschlossenen Stellung der zumindest einen Rolltorvorrichtung (22A; 22B) ein allseitiges Abschließen des Arbeitsbereichs erlaubt, und
wobei die Rolltorvorrichtungen (22A; 22B) bevorzugt unabhängig voneinander geöffnet und geschlossen werden können.

6. Kompaktzelle (Z) nach zumindest einen der vorhergehenden Ansprüche, wobei die Kompaktzelle (Z) für einen wechselseitigen Schweißbetrieb eingerichtet ist, sodass die Schutzumhausung (3) in der zweiten Position den zweiten Arbeitsbereich (A2) für den Schweißvorgang umschließt und gleichzeitig den ersten Arbeitsbereich (A1) freigibt insbesondere für den Zugriff eines Bedieners zum Rüsten oder Werkstückwechsel in anderen Arbeitsbereichen (A1; A3), und
wobei für einen Arbeitsbereichswechsel die Schutzumhausung (3) zumindest von der zweiten Position in die erste Position verfahrbar ist, zum Umschließen des ersten Arbeitsbereichs (A1) bei gleichzeitiger Freigabe zumindest des zweiten Arbeitsbereichs (A2).

7. Kompaktzelle (Z) nach zumindest einen der der vorhergehenden Ansprüche, wobei zumindest ein erster (A1), ein zweiter (A2) und zumindest ein weiterer Arbeitsbereich (A3) aufeinanderfolgend entlang einer Längsachse angeordnet sind, und
die Schutzumhausung (3) die Arbeitsbereiche (A1; A2; A3) durch lineares Verfahren der Schutzumhausung (3) entlang der Längsachse nacheinander umschließt.

8. Kompaktzelle (Z) nach einen der Ansprüche 1 bis 6, wobei ein von der Schutzumhausung (3) freigegebener Arbeitsbereich (A1; A2; A3) von zumindest einer Seite des Arbeitsbereichs (A1; A2; A3) und von der Oberseite des Arbeitsbereichs (A1; A2; A3) zugänglich ist um insbesondere eine Bestückung des Arbeitsbereichs (A1; A2; A3) durch einen Kran von oben zu ermöglichen.

9. Kompaktzelle (Z) nach zumindest einen der vorhergehenden Ansprüche,
wobei die Rolltorvorrichtung (22A; 22B) zumindest ein Rolltor (5A; 5B; 5C) umfasst, welches die Vorderseite (4A) oder Rückseite (4B) der Schutzumhausung (3) vollständig schließen kann; und
die Rolltore (18; 20) der Rolltorvorrichtung (22A; 22B) miteinander verbindbar sein können, um die Arbeitsbereiche weiter in Teilarbeitsbereiche (AB1; AB2) zu unterteilen.

10. Kompaktzelle (Z) nach zumindest einem der vorhergehenden Ansprüche,
wobei die Rolltorvorrichtung (22A; 22B) zumindest eine Rolltoraufhängung (V1; V2; V3) umfasst und die Rolltoraufhängung (V1; V2; V3) innenseitig im Zellendach (1) vorgesehen ist, wobei die Rolltoraufhängung (V1; V2; V3) ein Rolltor (5A; 5B; 5C; 18; 20) zum Schließen der Schutzumhausung (3) bevorzugt vom Zellendach (1) zum Boden des Arbeitsbereiches A1 A2 A3) bewegt und zum Öffnen der Schutzumhausung (3) vom Boden des Arbeitsbereiches (A1; A2; A3) zum Zellendach (1) bewegt; und/oder
wobei die Arbeitsbereiche (A1; A2; A3) durch zumindest eine weitere Trennwand (19) in zusätzliche Teilarbeitsbereiche (AB1; AB2) aufteilbar sind, wobei die zumindest eine weitere Trennwand (19) bevorzugt ein Rolltor ist.

11. Kompaktzelle (Z) nach zumindest einen der vorhergehenden Ansprüche, wobei die Teilarbeitsbereiche (AB1; AB2) durch die jeweiligen Rolltore (18; 20) der Rolltorvorrichtung (22A; 22B) und die Trennwand (19) der Schutzumhausung (3) von allen Seiten umschließbar sind und die Rolltore (18; 20) der Teilarbeitsbereiche (AB1; AB2) unabhängig voneinander geöffnet und geschlossen werden können; und/oder
wobei jeder Arbeitsbereich (A1; A2; A3) zumindest einen modularen Schweißtisch (8) umfasst, wobei der modulare Schweißtisch (8) zur genauen Positionierung von Werkstücken (11; 13; 17), eines Manipulators und/oder des Schweißroboters (15) eine Tischplatte (14) mit Lochraster aufweist; und/oder
wobei die Schutzumhausung (3) an drei Seiten und besonders bevorzugt an vier Seiten (4A; 4B; 4C; 4D) jeweils zumindest eine Rolltorvorrichtung (22A; 22B) umfasst, und die Rolltorvorrichtungen (22A, 22B) die drei Seiten und besonders bevorzugt vier Seiten (4A; 4B; 4C; 4D) der Schutzumhausung (3) durch jeweils zumindest ein Rolltor (5A; 5B; 5C) komplett verschließen können, sodass die Rolltore (5A; 5B, 5C) und die Zellenseitenwand (2) den unter der Schutzumhausung (3) liegenden Arbeitsbereich (A1; A2; A3) von allen Seiten umschließen können.

12. Kompaktzelle (Z) nach zumindest einen der vorhergehenden Ansprüche, wobei ein Schweißroboter (15) in einem der Arbeitsbereiche (A1; A2; A3) vorgesehen ist; und der Schweißroboter (15) durch die Schutzumhausung (3) zumindest in der ersten Position und/oder durch die Schutzumhausung (3) in der zweiten Position von allen Seiten umschlossen werden kann; und/oder
wobei die Schutzumhausung (3) zur Bewegung zumindest eine lineare Führungsschiene (23) umfasst und die Führungsschiene (23) an der Unterseite des Zellendachs (1) vorgesehen ist und auf zumindest einer Führungsvorrichtung (24) aufliegt.

13. Kompaktzelle (Z) nach Anspruch 12, wobei der Schweißroboter (15) durch eine Aufnahme (16; 26; 27; 30) entlang zumindest einer Achse beweglich ist; und
die Aufnahme (16; 26; 27; 30) so konfiguriert ist, dass eine Positionierung des Schweißroboters (15) in alle in der Schutzumhausung (3) befindlichen Arbeitsbereiche (A1; A2; A3) möglich ist, wobei die Aufnahme (16; 26; 27; 30) bevorzugt eine Linearführung (26; 31) und/oder eine exzentrische Achse (27) umfasst, und
die Aufnahme an der Tischplatte (14) oder am Zellendach (1) oder der Zellenseitenwand (2) vorgesehen ist.

14. Kompaktzelle (Z) nach Anspruch 12, wobei die Führungsvorrichtung (24) fest mit einem statischen Grundrahmen (25) verbunden ist und die Schutzumhausung (3) bevorzugt pneumatisch verfahrbar ist, und
wobei der Grundrahmen (25) fest mit dem modularen Schweißtisch (8) verbunden ist; und/oder wobei das Zellendach (1) zumindest eine Absaugöffnung (6) und/oder eine verfahrbare Absaugvorrichtung umfasst welche durch das Verfahren der Schutzumhausung (3) mitverfahrbar ist.

15. Verfahren zur Ausbildung einer Schutzumhausung (3) für Schweißvorgänge und/oder Schneidvorgänge mittels Schweißroboter (15),
wobei die Kompaktzelle (Z) ein Zellendach (1) und zumindest eine Zellenseitenwand (2) umfasst und das Zellendach (1) und die Zellenseitenwand (2) miteinander verbunden sind und eine Schutzumhausung (3) bilden,
**dadurch gekennzeichnet, dass**
die Kompaktzelle (Z) zumindest einen ersten (A1) und einen zweiten Arbeitsbereich (A2) für Schweißarbeiten umfasst; und
die Schutzumhausung (3) zumindest bidirektional verfahrbar ausgestaltet ist, das Verfahren umfassend den Schritt:
Verfahren der Schutzumhausung (3) von einer ersten Position in eine zweite Position zur Umschließung eines Arbeitsbereiches (A1; A2; A3) und gleichzeitiger Freigabe eines anderen Arbeitsbereichs (A1; A2; A3).

## Claims

1. A compact cell (Z) having a protective enclosure (3) for welding operations and/or cutting operations by means of welding robots (15), the compact cell (Z) comprising:
a cell roof (1) and at least one cell side wall (2), wherein
the cell side wall (2) is connected to the cell roof (1);
the protective enclosure (3), comprising at least the cell roof (1) and the at least one cell side wall (2); and
at least a first (A1) and a second (A2) working area for welding operations;
**characterized in that**:
the protective enclosure (3) is configured to be at least in both directions movable and in a first position encloses the first working area (A1) and exposes the second working area (A2) and in a second position encloses the second working area (A2) and exposes the first working area (A1).

2. Compact cell (Z) according to any of the preceding claims, wherein
the protective enclosure (3) comprises at least one roller shutter device (22A; 22B), and the roller shutter device (22A; 22B) in an open position allows access to the working area (A1; A2; A3) enclosed by the protective enclosure (3) and in a closed position closes off the working area (A1; A2; A3) for a welding operation.

3. Compact cell (Z) according to any of the preceding claims, wherein
a welding robot (15) is received on the protective enclosure (3) so it can be moved with it, in particular on the cell roof (1) and/or on the cell side wall (2), and wherein
the welding robot is preferably a collaborative robot.

4. Compact cell (Z) according to any of the preceding claims. wherein
the protective enclosure (3) includes, adjacent to the cell side wall (2), at least a cell front side (4A) with a front roller shutter device (22A) and a cell rear side (4B) with a rear roller shutter device (22B), and wherein
the protective enclosure (3) can at least partially be closed by the front and/or rear roller shutter device (22A; 22B).

5. Compact cell (Z) according to claim 1, wherein
the protective enclosure (3) includes at least one roller shutter device (22A; 22B) and/or a welding robot (15) which are received in the cell roof (1) and/or on cell side walls (2), and the protective enclosure (3), in the closed position of the at least one roller shutter device (22A; 22B), allows the working area to be closed off on all sides, and wherein
the roller shutter devices (22A; 22B) preferably can be opened and closed independently of each other.

6. Compact cell (Z) according to any of the preceding claims, wherein
the compact cell (Z) is set up for an alternating welding operation, so that the protective enclosure (3) in the second position encloses the second working area (A2) for the welding operation and at the same time exposes the first working area (A1), in particular for access by an operator for setting up or changing workpieces in other working areas (A1; A3), and wherein
the protective enclosure (3) is movable at least from the second position into the first position for a change of working area, for enclosing the first working area (A1), simultaneously exposing at least the second working area (A2).

7. Compact cell (Z) according to any of the preceding claims, wherein
at least a first (A1), a second (A2) and at least a further working area (A3) are arranged successively along a longitudinal axis, and
the protective enclosure (3) encloses the working area (A1; A2; A3) by moving the protective enclosure (3) in a linear direction successively along the longitudinal axis.

8. Compact cell (Z) according to any of the claims 1 to 6, wherein
a working area (A1; A2; A3) exposed by the protective enclosure (3) is accessible from at least one side of the working area (A1; A2; A3) and from the top of the working area (A1; A2; A3), in particular to enable the working area (A1; A2; A3) to be loaded by a crane from above.

9. Compact cell (Z) according to any of the preceding claims. wherein
the roller shutter device (22A; 22B) comprises at least one roller shutter (5A; 5B; 5C) capable of completely closing the front (4A) or rear (4B) of the protective enclosure (3); and
the roller shutters (18; 20) of the roller shutter device (22A; 22B) can be interconnectable to further divide the working areas into sub-working areas (AB1; AB2).

10. Compact cell (Z) according to any of the preceding claims, wherein
the roller shutter device (22A; 22B) comprises at least one roller shutter mount (V1; V2; V3) and the roller shutter mount (V1; V2; V3) is provided on the inside in the cell roof (1), wherein
the roller shutter mount (V1; V2; V3) moves a roller shutter (5A; 5B; 5C; 18; 20) preferably from the cell roof (1) to the floor of the working area (A1; A2; A3) to close the protective enclosure (3) and from the floor of the working area (A1; A2; A3) to the cell roof (1) to open the protective enclosure (3), wherein
the working areas (A1; A2; A3) are dividable by at least one further partition wall (19) into additional partial working areas (AB1; AB2), wherein the at least one further partition wall (19) is preferably a roller shutter.

11. Compact cell (Z) according to any of the preceding claims, wherein
the partial working areas (AB1; AB2) can be enclosed from all sides by the respective roller shutters (18; 20) of the roller shutter device (22A; 22B) and the partition wall (19) of the protective enclosure (3) and the roller shutters (18; 20) of the partial working areas (AB1; AB2) can be opened and closed independently of one another; and/or wherein
each working area (A1; A2; A3) comprises at least one modular welding bench (8), wherein
the modular welding bench (8) includes a tabletop (14) with a perforated grid for precise positioning of workpieces (11; 13; 17), a manipulator and/or the welding robot (15); and/or wherein
the protective enclosure (3) comprises at least one roller shutter device (22A; 22B) on each of three sides and particularly preferably on each of four sides (4A; 4B; 4C; 4D), and
the roller shutter devices (22A, 22B) can completely close the three sides and particularly preferably four sides (4A; 4B; 4C; 4D) of the protective enclosure (3) by means of at least one roller shutter (5A; 5B; 5C) in each case, so that the roller shutters (5A; 5B, 5C) and the cell side wall (2) can enclose the working area (A1; A2; A3) located under the protective enclosure (3) from all sides.

12. Compact cell (Z) according to any of the preceding claims, wherein
a welding robot (15) is provided in one of the working areas (A1; A2; A3); and the welding robot (15) can be enclosed from all sides by the protective enclosure (3) at least in the first position and/or by the protective enclosure (3) in the second position; and/or wherein
the protective enclosure (3) comprises at least one linear guide rail (23) for movement and the guide rail (23) is provided on the underside of the cell roof (1) and rests on at least one guide device (24).

13. Compact cell (Z) according to claim 12, wherein
the welding robot (15) is movable along at least one axis by a receptacle (16; 26; 27; 30); and
the receptacle (16; 26; 27; 30) is configured in such a way that it is possible to position the welding robot (15) in all working areas (A1; A2; A3) located in the protective enclosure (3), the receptacle (16; 26; 27; 30) preferably comprising a linear guide (26; 31) and/or an excentric axis (27), and
the receptacle is provided on the tabletop (14) or on the cell roof (1) or the cell side wall (2).

14. Compact cell (Z) according to claim 12, wherein
the guide device (24) is fixedly connected to a static base frame (25) and the protective enclosure (3) is preferably pneumatically displaceable, and wherein
the base frame (25) is fixedly connected to the modular welding bench (8); and/or wherein
the cell roof (1) comprises at least one extraction opening (6) and/or a movable extraction device which can be moved along by the movement of the protective enclosure (3).

15. Method for configurating a protective enclosure (3) for welding operations and/or cutting operations by means of welding robots (15), wherein
the compact cell (Z) comprises a cell roof (1) and at least one cell side wall (2) and the cell roof (1) and the cell side wall (2) are connected to each other and form a protective enclosure (3),
**characterized in that**:
the compact cell (Z) comprises at least a first (A1) and a second (A2) working area for welding operations; and
the protective enclosure (3) is configured to be movable at least in both directions, the method comprising the step:
moving the protective enclosure (3) from a first position to a second position to enclose one working area (A1; A2; A3) and simultaneously expose another working area (A1; A2; A3).

## Revendications

1. Cellule compacte (Z) comprenant une enceinte de protection (3) pour des opérations de soudage et/ou des opérations de coupe au moyen de robots de soudage (15), la cellule compacte (Z) comprenant :
- un toit de cellule (1) et au moins une paroi latérale de cellule (2), la paroi latérale de cellule (2) étant reliée au toit de cellule (1) ;
- l'enceinte de protection (3), qui comprend au moins le toit de cellule (1) et ladite au moins une paroi latérale de cellule (2) ; et
- au moins une première (A1) et une deuxième zone de travail (A2) pour les opérations de soudage ;
**caractérisée en ce que**
l'enceinte de protection (3) est conçue de manière à pouvoir être déplacée au moins de manière bidirectionnelle et, dans une première position, entoure la première zone de travail (A1) et libère la deuxième zone de travail (A2) et, dans une deuxième position, entoure la deuxième zone de travail (A2) et libère la première zone de travail (A1).

2. Cellule compacte (Z) selon la revendication précédente,
dans laquelle l'enceinte de protection (3) présente au moins un dispositif de porte roulante (22A ; 22B), et le dispositif de porte roulante (22A ; 22B) permet, dans une position ouverte, d'accéder à la zone de travail (A1 ; A2 ; A3) entourée par l'enceinte de protection (3) et, dans une position fermée, de fermer la zone de travail (A1 ; A2 ; A3) pour une opération de soudage.

3. Cellule compacte (Z) selon l'une au moins des revendications précédentes, dans laquelle un robot de soudage (15) est logé au niveau de l'enceinte de protection (3) de manière à pouvoir être déplacé avec celle-ci, en particulier au niveau du toit de cellule (1) et/ou de la paroi latérale de cellule (2), et le robot de soudage est de préférence un robot collaboratif.

4. Cellule compacte (Z) selon l'une au moins des revendications précédentes,
dans laquelle l'enceinte de protection (3) présente, de manière adjacente à la paroi latérale de cellule (2), au moins une face avant de cellule (4A) avec un dispositif de porte roulante avant (22A) et une face arrière de cellule (4B) avec un dispositif de porte roulante arrière (22B), et
l'enceinte de protection (3) peut être fermée au moins partiellement par le dispositif de porte roulante avant et/ou arrière (22A ; 22B).

5. Cellule compacte (Z) selon la revendication 1,
dans laquelle l'enceinte de protection (3) présente au moins un dispositif de porte roulante (22A ; 22B) et/ou un robot de soudage (15) qui sont logés dans le toit de cellule (1) et/ou sur les parois latérales de cellule (2), et l'enceinte de protection (3) permet, dans la position fermée dudit au moins un dispositif de porte roulante (22A ; 22B), une fermeture de tous les côtés de la zone de travail, et
les dispositifs de porte roulante (22A ; 22B) peuvent être ouverts et fermés de préférence indépendamment l'un de l'autre.

6. Cellule compacte (Z) selon l'une au moins des revendications précédentes,
dans laquelle la cellule compacte (Z) est conçue pour un mode de soudage alterné, de sorte que l'enceinte de protection (3), dans la deuxième position, entoure la deuxième zone de travail (A2) pour l'opération de soudage et libère en même temps la première zone de travail (A1), en particulier pour l'accès d'un opérateur pour la préparation ou le changement de pièces à oeuvrer dans d'autres zones de travail (A1 ; A3), et
pour un changement de zone de travail, l'enceinte de protection (3) peut être déplacée au moins de la deuxième position à la première position, pour entourer la première zone de travail (A1) tout en libérant en même temps au moins la deuxième zone de travail (A2).

7. Cellule compacte (Z) selon l'une au moins des revendications précédentes,
dans laquelle au moins une première (A1), une deuxième (A2) et au moins une autre zone de travail (A3) sont disposées successivement le long d'un axe longitudinal, et
l'enceinte de protection (3) entoure successivement les zones de travail (A1 ; A2 ; A3) par déplacement linéaire de l'enceinte de protection (3) le long de l'axe longitudinal.

8. Cellule compacte (Z) selon l'une des revendications 1 à 6,
dans laquelle une zone de travail (A1 ; A2 ; A3) libérée par l'enceinte de protection (3) est accessible par au moins un côté de la zone de travail (A1 ; A2 ; A3) et par le côté supérieur de la zone de travail (A1 ; A2 ; A3) pour permettre en particulier un équipement de la zone de travail (A1 ; A2 ; A3) par le haut par une grue.

9. Cellule compacte (Z) selon l'une au moins des revendications précédentes,
dans laquelle le dispositif de porte roulante (22A ; 22B) comprend au moins une porte roulante (5A ; 5B ; 5C) qui peut fermer complètement la face avant (4A) ou la face arrière (4B) de l'enceinte de protection (3) ; et
les portes roulantes (18 ; 20) du dispositif de porte roulante (22A ; 22B) peuvent être reliées entre elles pour diviser davantage les zones de travail en zones de travail partielles (AB1 ; AB2).

10. Cellule compacte (Z) selon l'une au moins des revendications précédentes,
dans laquelle le dispositif de porte roulante (22A ; 22B) comprend au moins une suspension de porte roulante (V1 ; V2 ; V3), la suspension de porte roulante (V1 ; V2 ; V3) est prévue du côté intérieur dans le toit de cellule (1), et la suspension de porte roulante (V1 ; V2 ; V3) déplace une porte roulante (5A ; 5B ; 5C ; 18 ; 20) de préférence depuis le toit de cellule (1) vers le fond de la zone de travail (A1 ; A2 ; A3), afin de fermer l'enceinte de protection (3), et depuis le fond de la zone de travail (A1 ; A2 ; A3) vers le toit de cellule (1), afin d'ouvrir l'enceinte de protection (3) ; et/ou
les zones de travail (A1 ; A2 ; A3) peuvent être divisées en zones de travail partielles supplémentaires (AB1 ; AB2) par au moins une autre paroi de séparation (19), ladite au moins une autre paroi de séparation (19) étant de préférence une porte roulante.

11. Cellule compacte (Z) selon l'une au moins des revendications précédentes,
dans laquelle les zones de travail partielles (AB1 ; AB2) peuvent être entourées de tous les côtés par les portes roulantes respectives (18 ; 20) du dispositif de porte roulante (22A ; 22B) et par la paroi de séparation (19) de l'enceinte de protection (3), et les portes roulantes (18 ; 20) des zones de travail partielles (AB1 ; AB2) peuvent être ouvertes et fermées indépendamment les unes des autres ; et/ou
chaque zone de travail (A1 ; A2 ; A3) comprend au moins une table de soudage modulaire (8), la table de soudage modulaire (8) présentant un plateau de table (14) avec une trame de trous pour le positionnement précis de pièces à oeuvrer (11 ; 13 ; 17), d'un manipulateur et/ou du robot de soudage (15) ; et/ou
l'enceinte de protection (3) comprend sur trois côtés et de manière particulièrement préférée sur quatre côtés (4A ; 4B ; 4C ; 4D) respectivement au moins un dispositif de porte roulante (22A ; 22B), et les dispositifs de porte roulante (22A, 22B) peuvent fermer complètement les trois côtés et de manière particulièrement préférée les quatre côtés (4A ; 4B ; 4C ; 4D) de l'enceinte de protection (3) par au moins une porte roulante (5A ; 5B ; 5C) respective, de sorte que les portes roulantes (5A ; 5B, 5C) et la paroi latérale de cellule (2) peuvent entourer de tous côtés la zone de travail (A1 ; A2 ; A3) située sous l'enceinte de protection (3).

12. Cellule compacte (Z) selon l'une au moins des revendications précédentes,
dans laquelle un robot de soudage (15) est prévu dans l'une des zones de travail (A1 ; A2 ; A3) ; et
le robot de soudage (15) peut être entouré de tous côtés par l'enceinte de protection (3) au moins dans la première position et/ou par l'enceinte de protection (3) dans la deuxième position ; et/ou
l'enceinte de protection (3) comprend au moins un rail de guidage linéaire (23) pour le déplacement, et le rail de guidage (23) est prévu sur la face inférieure du toit de cellule (1) et repose sur au moins un dispositif de guidage (24).

13. Cellule compacte (Z) selon la revendication 12,
dans laquelle le robot de soudage (15) est mobile le long d'au moins un axe grâce à un logement (16 ; 26 ; 27 ; 30) ; et
le logement (16 ; 26 ; 27 ; 30) est configuré de manière à permettre un positionnement du robot de soudage (15) dans toutes les zones de travail (A1 ; A2 ; A3) situées dans l'enceinte de protection (3), le logement (16 ; 26 ; 27 ; 30) comprenant de préférence un guidage linéaire (26 ; 31) et/ou un axe excentrique (27), et
le logement est prévu sur le plateau de table (14) ou sur le toit de cellule (1) ou sur la paroi latérale de cellule (2).

14. Cellule compacte (Z) selon l'une au moins des revendications précédentes,
dans laquelle le dispositif de guidage (24) est relié solidairement à un cadre de base statique (25), et l'enceinte de protection (3) est déplaçable de préférence par voie pneumatique, et
le cadre de base (25) est relié solidairement à la table de soudage modulaire (8) ; et/ou
le toit de cellule (1) présente au moins une ouverture d'aspiration (6) et/ou un dispositif d'aspiration mobile qui peut être déplacé par le déplacement de l'enceinte de protection (3).

15. Procédé de réalisation d'une enceinte de protection (3) pour des opérations de soudage et/ou des opérations de coupe au moyen d'un robot de soudage (15), la cellule compacte (Z) comprenant un toit de cellule (1) et au moins une paroi latérale de cellule (2), et le toit de cellule (1) et la paroi latérale de cellule (2) étant reliés l'un à l'autre et formant une enceinte de protection (3),
**caractérisé en ce que**
la cellule compacte (Z) comprend au moins une première (A1) et une deuxième zone de travail (A2) pour des travaux de soudage ; et
l'enceinte de protection (3) est conçue de manière à pouvoir être déplacée au moins de manière bidirectionnelle, le procédé comprenant l'étape consistant à :
déplacer l'enceinte de protection (3) d'une première position à une deuxième position pour entourer une zone de travail (A1 ; A2 ; A3) tout en libérant en même temps une autre zone de travail (A1 ; A2 ; A3).
